# EUROPEAN PATENT APPLICATION

(11) **EP 1 617 339 A1**
(43) Date of publication of application: **18.01.2006**
(21) Application number: 05014674.5
(22) Date of filing: 06.07.2005
(51) Int. Cl.: G06F 17/24, G06F 17/21

(54) **Layout editing device and layout editing program**

(30) Priority: 12.07.2004 JP 2004204434
(71) Applicant: Brother Kogyo Kabushiki Kaisha, Nagoya-shi, Aichi-ken 467-8561 (JP)
(72) Inventor: Tanaka, Motonori Technology Planning & IP Dept., Nagoya-shi Aichi-ken 467-8562 (JP); Ikedo, Tatsuhiro Technology Planning & IP Dept., Nagoya-shi Aichi-ken 467-8562 (JP)
(74) Representative: Hofer, Dorothea

(57) **Abstract**

When a plurality of layout styles are applied successively, enables deletion of an object displayed up to then to be controlled corresponding to user's convenience of use. If application of a layout style is instructed from an operator, whether an object exists in an object memory area is checked and, unless any object exists, an object is added according to the layout style. If an object exists, whether deletion set in each object is permissible is checked and all objects permitted to be deleted are deleted. After that, an object application procedure for matching an object that is not deleted with an object in the layout style is executed and its application result is displayed.

## Description

### CROSS-REFERENCE TO RELATED APPLICATION

This application claims priority from Japanese Patent Application No. 2004-204434, filed July 12, 2004.

### BACKGROUND

The disclosure relates to a layout editing device, a program for making the computer function as the layout editing device and a recording medium.

Although generally, when it is intended to print a desired character string or image, the easiest way is to print them is in a state in which the string or image is displayed on a display device as it is. If it is intended to pick up only necessary information in a convenient condition in which it can be carried for printing, it is necessary to pick out the necessary portion, divide the area into those for images or character strings with a word processor software and allocate individual data in a preferable condition.

To reduce labor and time necessary for this purpose, often, a print layout is preliminarily prepared so as to allocate a character string or an image therein. Japanese Patent Application Laid-Open No. 2001-101179 discloses such a data processing device in which the area is divided into a text area in which text data should be disposed and an image area in which image data should be disposed by dividing the area according to the predetermined ratio and the image and text are disposed within the respective areas.

In the above-described data processing device, the data area is divided by changing the ratio of areas to be allocated to text and image data corresponding to the quantity and size of text data and image data (hereinafter referred to as object). In some devices, areas divided into text and image are stored in a plurality of layout styles and a desired layout style is selected from these layout styles in order to carry out the print of the data.

An advantage of having a plurality of layout styles exists in that the layout style can be displayed successively until a desired print image is reached. If the plurality of layout styles are applied successively, there is a problem that an object expressed in the layout style displayed up to then is deleted and a new layout style is displayed or another object is displayed according to a new layout style along with a retained object, i.e., the object displayed up to then.

### SUMMARY OF THE INVENTION

The disclosure that follows is to solve the above-described problem and has as one object to provide a layout editing device capable of controlling deletion of an object displayed up to then corresponding to the user's desire when a plurality of layout styles are applied successively, a layout editing program and a recording medium thereof.

To achieve the above-described object, according to a first aspect of the disclosure, there is provided a layout editing device comprising an object memory that stores an object to be printed; a display that displays the object stored in the object memory; a layout style memory that stores a layout style containing at least disposition information for specifying a position in which the object is to be disposed; selecting means for selecting a layout style for use from a plurality of layout styles stored in the layout style memory; disposing means for disposing objects stored in the object memory based on a layout style selected by the selecting means; object adding means for, if the layout style selected by the selecting means contains disposition information of objects other than the objects disposed by the disposing means, adding the objects based on the disposition information; and display control means for controlling the display of an object disposed by the disposing means and an object added by the object adding means on the display, the layout editing device further comprising delete YES/NO determining means for, when a layout style is selected by the selecting means, determining whether an object displayed on the display is deleted; and deleting means for, when a new layout style is selected by the selecting means, deleting an object that is determined possible to delete by the delete YES/NO determining means, wherein the object adding means, after the object is deleted by the deleting means, adds an object.

According to a second aspect of the disclosure, there is provided a layout editing device comprising input means for inputting an object to be printed; an object memory that stores the object inputted by the input means; a display that displays the object stored in the object memory; a layout style memory that stores a layout style containing at least disposition information for specifying the position in which the object is to be disposed; selecting means for selecting a layout style for use from a plurality of layout styles stored in the layout style memory; disposing means for disposing an object stored by the object memory based on a layout style selected by the selecting means; object adding means for, if the layout style selected by the selecting means includes disposition information of objects other than the object disposed by the disposing means, adding an object based on the disposition information; and a display controller that controls displaying an object disposed by the disposing means and an object added by the object adding means on the display, the layout editing device further comprising input YES/NO memorizing means for memorizing whether each object is an object inputted by the input means; input YES/NO memory control means for making the input YES/NO memorizing means store that an input occurs when the input is made to an object by the input means; and deleting means for, if a new layout style is selected by the selecting means, deleting any object whose input is not stored in the input YES/NO memorizing means, wherein the object adding means, after the object is deleted by the deleting means, adds an object.

According to a third aspect of the disclosure, there is provided a layout editing device comprising a first memory that stores an object to be printed; a display that displays the object stored in the first memory; a second memory that stores a layout style containing at least disposition information for specifying a position in which the object is to be disposed; a selecting device that selects a layout style for use from a plurality of layout styles stored in the second memory; and a controller that disposes objects stored in the first memory based on a layout style selected by the selecting device, if the layout style selected by the selecting device contains disposition information of objects other than the disposed objects, adds an object based on the disposition information and displays the disposed object and the added object on the display, the controller determining whether an object displayed on the display is deleted when a layout style is selected by the selecting device, deleting an object determined to be permitted to be deleted if a new layout style is selected by the selecting device, and adding an object based on the disposition information after the object is deleted.

According to a fourth aspect of the disclosure, there is provided a layout editing device comprising an input device for inputting an object to be printed; a first memory that stores an object inputted by the input device; a display that displays an object stored in the first memory; a second memory that stores a layout style containing at least disposition information for specifying the position in which the object is to be disposed; a selecting device for selecting a layout style for use from a plurality of layout styles stored in the second memory; and a controller that disposes an object stored in the first memory based on the layout style selected by the selecting device, if a layout style selected by the selecting device includes the disposition information of objects other than the disposed object, adds an object based on the disposition information and displays the disposed object and the added object on the display, wherein the first memory stores whether each object is an object inputted by the input device and the controller further stores that an input occurs in the first memory when the input to an object is executed by the input device, if a new layout style is selected by the selecting device, deletes an object in which an input is not made in the first memory and after the object is deleted, adds the object.

According to a fifth aspect of the disclosure, there is provided a layout editing program stored on a computer readable recording medium, for making the computer execute a selecting step of selecting a layout style for use from a plurality of layout styles stored in a layout style memory, each stored layout style containing at least disposition information for specifying the position in which an object to be printed is disposed; a disposing step of reading an object from an object memory that stores the object and disposing based on a layout style selected by the selecting step; an object adding step of, if the layout style selected by the selecting step includes the disposition information of objects other than the objects disposed by the disposing step, adding an object based on the disposition information; and a display control step of controlling the display of an object disposed by the disposing step and an object added by the object adding step on a display, the layout editing program further making the computer execute a delete YES/NO determining step of determining whether an object displayed on the display is deleted when a layout style is selected in the selecting step and a deletion step of, if a new layout style is selected by the selecting step, deleting an object determined to be allowed to be deleted by the delete YES/NO determining step, the object adding step adding an object after the object is deleted in the deleting step.

According to a sixth aspect of the disclosure, there is provided a layout editing program stored on a computer readable recording medium making the computer execute an input step of inputting an object to be printed; a selecting step of selecting a layout style for use from a plurality of layout styles stored in a layout style memory that stores a layout style containing at least the disposition information for specifying the position in which the object is to be disposed; a disposing step of reading an object from an object memory that stores an inputted object in the input step and disposes it based on a layout style selected by the selecting step; an object adding step of, if the layout style selected by the selecting step contains the disposition information of objects other than an object disposed by the disposing step, adding an object based on the disposition information; and a display control step of controlling the display of an object disposed by the disposing step and an object added by the object adding step on a display, the layout editing program further making the computer execute an input YES/NO memory control step of, when an input is made to an object in the input step, storing that the input is made in an input YES/NO memorizing means, and a deleting step of, when a new layout style is selected by the selecting step, deleting an object whose input is not stored in the input YES/NO memorizing means, wherein the object adding step adds an object after an object is deleted in the deleting step.

### BRIEF DESCRIPTION OF THE DRAWINGS

Exemplary embodiments will be described below in detail with reference to the accompanying drawings in which:

FIG. 1 is a block diagram showing the electrical structure of the layout editing device;

FIG. 2 is a schematic diagram showing the configuration of the layout style database stored in a hard disk drive of the layout editing device;

FIG. 3 is an explanatory diagram showing an example of the layout style;

FIG. 4 is an explanatory diagram showing an example of the layout style;

FIG. 5 is a schematic diagram showing the configuration of an object memory area of RAM;

FIG. 6 is a schematic diagram showing the configuration of the object memory area of the RAM;

FIG. 7 is a schematic diagram showing the configuration of the object memory area of the RAM;

FIG. 8 is a flowchart of a main routine of the layout editing device;

FIG. 9 is a flowchart of the subroutine for delete YES/NO setting processing to be executed in S15 of FIG. 8;

FIG. 10 is a flowchart of a subroutine for layout style application processing to be executed in S 19 of FIG. 8;

FIG. 11 is a flowchart of a subroutine for object application processing to be executed in S53 of FIG. 10;

FIG. 12 is a flowchart of a subroutine for object matching processing depending on the attribute to be executed in S61 of FIG. 11;

FIG. 13 is a flowchart of a subroutine for object matching processing depending on the quantity of characters to be executed in S67 of FIG. 11;

FIG. 14 is a flowchart of a subroutine for object matching processing depending on a relative position to be executed in S71 of FIG. 11;

FIG. 15 is a flowchart of a subroutine for remaining object processing to be executed in S75 of FIG. 11;

FIG. 16 is an explanatory diagram showing an example of a display screen at the time of startup of layout editing;

FIG. 17 is an explanatory diagram showing an example of the layout style application screen;

FIG. 18 is an explanatory diagram showing another example of the layout style application screen;

FIG. 19 is an explanatory diagram showing an example of the deletion YES/NO setting screen;

FIG. 20 is an explanatory diagram showing the screen after data is inputted into an object of the layout style;

FIG. 21 is an explanatory diagram showing an example of a screen in the case where a new layout style is applied when there is an inputted object;

FIG. 22 is an explanatory diagram showing an example of a screen in the case where the layout style is applied after the delete YES/NO setting is individually carried out;

FIG. 23 is an explanatory diagram showing an example of the layout style selecting screen;

FIG. 24 is an explanatory diagram showing an example of a screen in the case where a vertical setting layout style is selected;

FIG. 25 is an explanatory diagram showing an example of a screen in the case where a horizontal setting layout style is selected;

FIG. 26 is an explanatory diagram showing an example of matching processing based on a relative position; and

FIG. 27 is an explanatory diagram showing an example of matching processing based on a relative position.

### DETAILED DESCRIPTION OF EMBODIMENTS

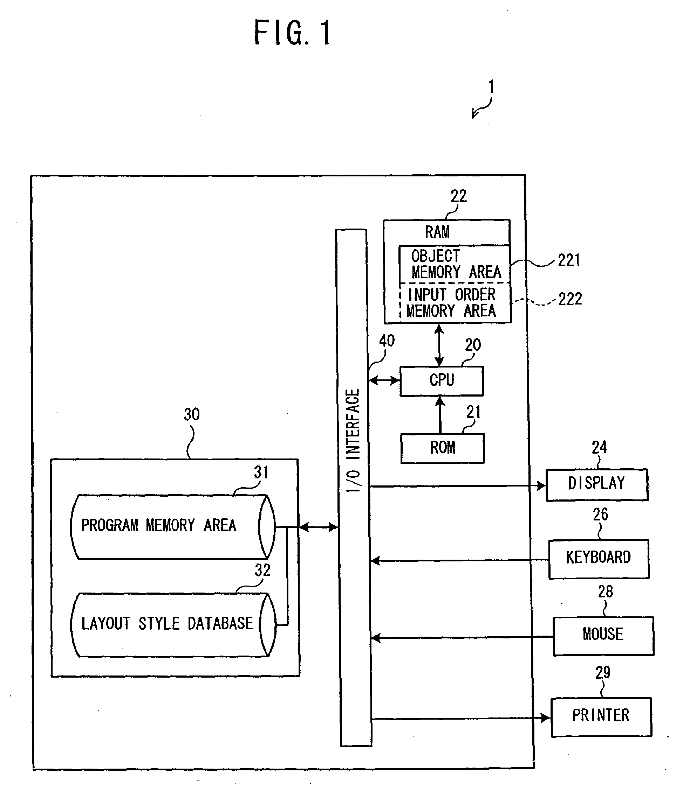

Next, exemplary embodiments will be described with reference to the accompanying drawings. First, the configuration of the layout editing device 1 will be described with reference to FIGS. 1-7.

As shown in FIG. 1, for purposes of explanation, the layout editing device 1 is a personal computer. The layout editing device 1 includes a CPU 20 for controlling the layout editing device 1. A ROM 21 that stores the BIOS, etc., a RAM 22 that temporarily stores various kinds of data and an I/O interface 40 that executes data exchange are connected to the CPU 20. The RAM 22 is provided with an object memory area 221 for storing the text being edited or an object, such as images.

A display 24, a keyboard 26, a mouse 28, a printer 29 and a hard disk drive 30 are connected to the I/O interface 40. The display 24 displays characters, images and the like. The keyboard 26 allows an input through various keys. The mouse 28 is used for pointing to a position on a screen of the display. The printer 29 executes printing according to an instruction from the layout editing device 1. The hard disk drive 30 includes a program memory area 31 that stores the program to be executed by the CPU 20 and a layout style database 32.

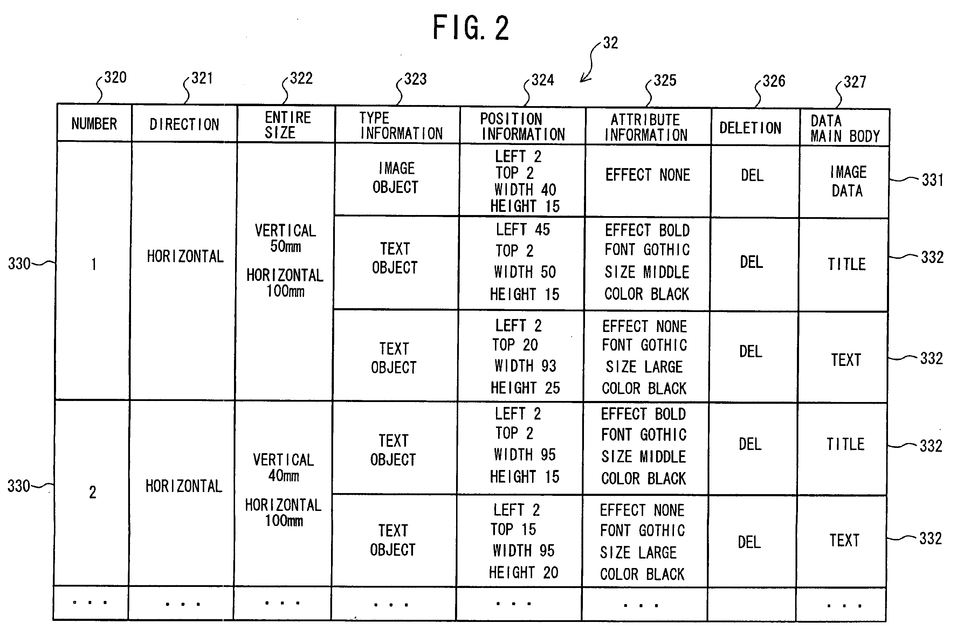

The layout style database 32 is an assembly of layout styles which specify how objects of individual input data are preliminarily disposed. As shown in FIG. 2, the layout style database 32 comprises fields for layout style number 320, direction 321, entire size 322, type information 323, position information 324, attribute information 325, delete YES/NO setting 326, and data main body 327. The direction 321 indicates whether a given layout style is a vertical setting or a horizontal setting. The entire size 322 indicates the size of the entire layout style. The type information 323 indicates the type of object to be disposed. The position information 324 indicates the position of an object to be disposed in the layout style. The attribute information 325 indicates the modification attribute and the like for a given object. The deletion YES/NO setting 326 indicates whether a displayed object may be deleted if a new layout style is applied. The data main body 327 is just data to be inputted to the given object. A single layout style 330 is regarded as a single record and the image object 331 and the text object 332 contained in the given layout style are regarded as sub-records. The type information 323, the position information 324, the attribute information 325, the delete YES/NO setting 326, and the data main body 327 correspond to each sub-record and the number 320, the direction 321 and the entire size 322 correspond to each record.

For example, layout style number 1 in FIG. 2 indicates a horizontal setting layout style, comprising three objects and the size of the entire layout style is 50 mm vertically and 100 mm horizontally. The type of a first object is an image object 331, which is disposed at 2 mm from the left end of the layout style and at 2 mm from the top while the size of the object is 40 mm in width and 15 mm in height. Then, that object is not modified and the delete YES/NO setting is set to delete YES (DEL in this example; either "YES" or "DEL" could be used).

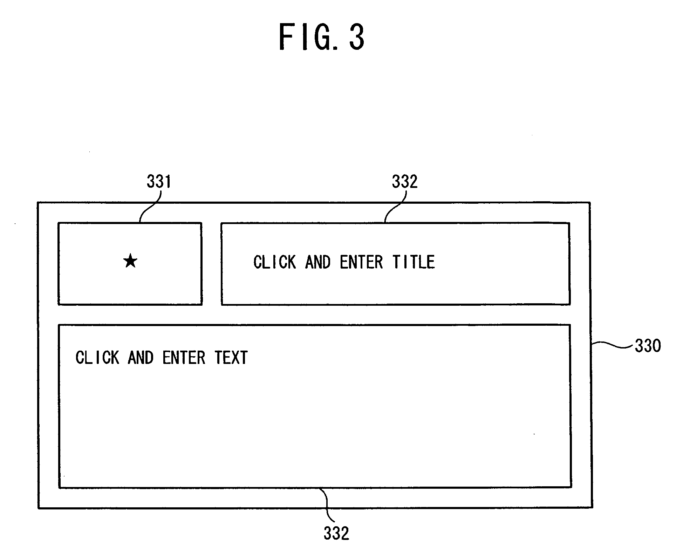

The type of a second object is a text object 332, which is disposed at 45 mm from the left end of the layout style and at 2 mm from the top and the size of the object is 50 mm in width and 15 mm in height. Then, the style, also called effect in the drawings, the font, the character size, and the character color are specified to be bold, Gothic, medium, and black respectively as character modifications for the object and the delete YES/NO setting is set to YES. A third object is a text object 332, which is disposed at 2 mm from the left end of the layout style and at 20 mm from the top. The size of the object is 93 mm in width and 25 mm in height. Then, the style, the font, the character size, and the character color are specified to be NONE, Gothic, large and black respectively as character modifications for the object and the delete YES/NO setting is set to YES. In the meantime, according to the embodiment, the default value of the delete YES/NO setting for each object in the layout style is YES (DEL). Thus, when a new layout style is applied, all objects are deleted and then an object of next layout style is displayed. The disposition of layout style number 1 is shown in FIG. 3. In the layout style 330, the image object 331 is disposed at the left top and the text objects 332 are disposed at the right top and bottom.

The layout style number 2, in FIG. 2, also indicates a horizontal layout style, which is comprised of two objects and the size of the entire layout style is 40 mm vertically and 100 mm horizontally. The type of the first object is a text object 332, which is disposed at 2 mm from the left end of the layout style and at 2 mm from the top. The size of the object is 95 mm in width and 15 mm in height. Then, the style, the font, the character size and the character color are specified to be bold, Gothic, medium and black respectively as the character modification in the object and the delete YES/NO setting is set to YES.

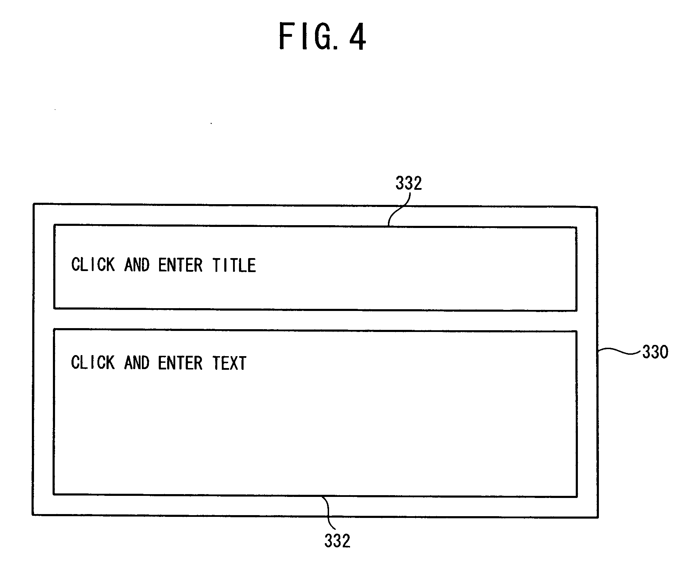

The type of the second object is the text object 332, which is disposed at 2 mm from the left end and at 15 mm from the top and the size of the object is 95 mm in width and 20 mm in height. Then, the style, the font, the character size and character color are specified to be NONE, Gothic, large and black respectively as the character modification in the object and the delete YES/NO setting is set to YES. The disposition of the layout style number 2 is shown in FIG. 4. The two text objects 332 are disposed on the upper and lower sides in the layout style 330.

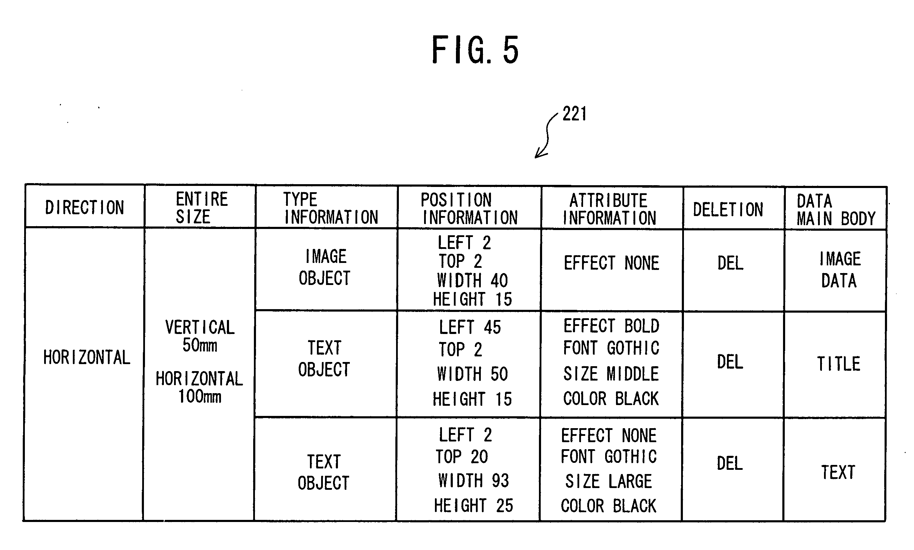

When an object is inputted, the data main body of that object is stored in the object memory area 221 in the RAM 22 together with the type information of the object, position information and attribute information. When a layout style is applied, it is stored in conditions in which the data main body of the object is disposed in the layout style. For example, the state of the object memory area 221, just after the layout style number 1 is applied, turns into the state as shown in FIG. 5. Because no data input is performed, the content of the object memory area 221 is the same as the state of the layout style number 1 of the layout style database 32. Although setting of delete YES/NO is stored in the delete YES/NO setting field, an inputted object is automatically stored if it is deleted (if input occurs, it cannot be deleted). If an object is inputted in conditions in which any layout style is not applied, the objects are stored in the order of input.

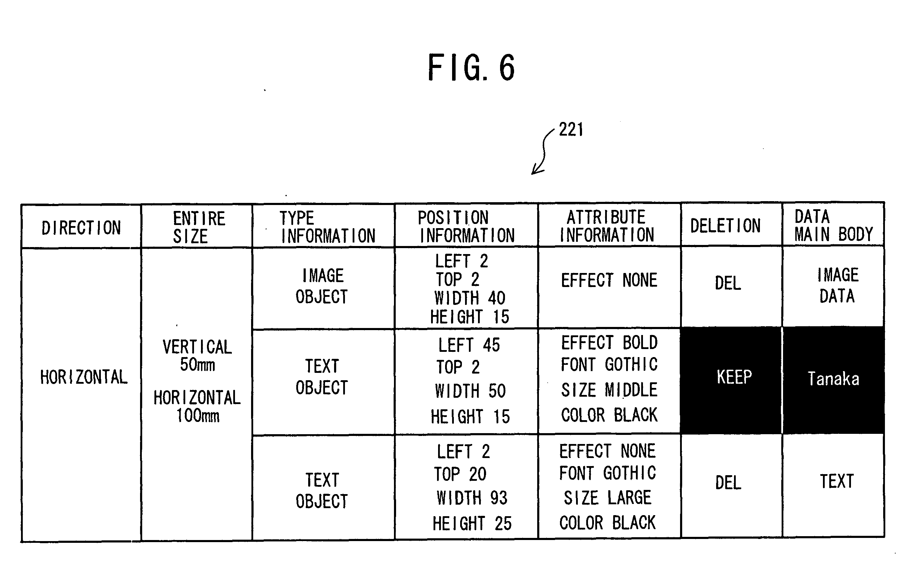

Here, assume that text data "Tanaka" is inputted into a text object on the right top of a display image in FIG. 3. At this time, the status of the object memory area 221 turns into the state shown in FIG. 6. The data main body column of the inputted text object is changed to "Tanaka" and the delete YES/NO setting is set to NO (in the same Figure, "KEEP" is indicated). As described above, according to this embodiment, it is judged that an object in which data is inputted is desired to be stored even if no operation is carried out and even if a new layout style is applied, it is not deleted from the work area on the display 24.

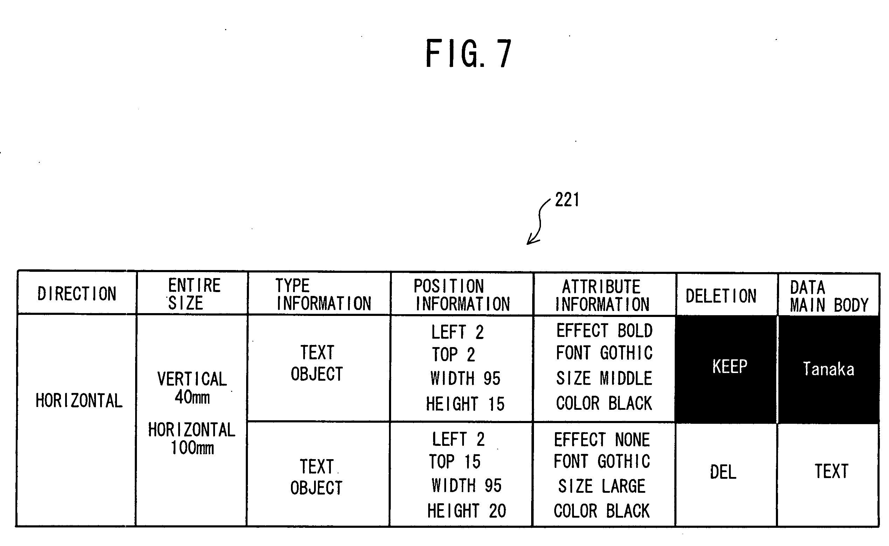

For example, assuming that the layout style number 2 is newly applied, the status of the object memory area 221 turns into the state shown in FIG. 7. The "Tanaka" which is text data inputted when the layout style number 1 is selected is stored as the content of the first text object. At this time, the attribute information is rewritten to attribute information specified by the layout style. In the meantime, the attribute information may be held just in the form of a previous layout style or may be selected by a user.

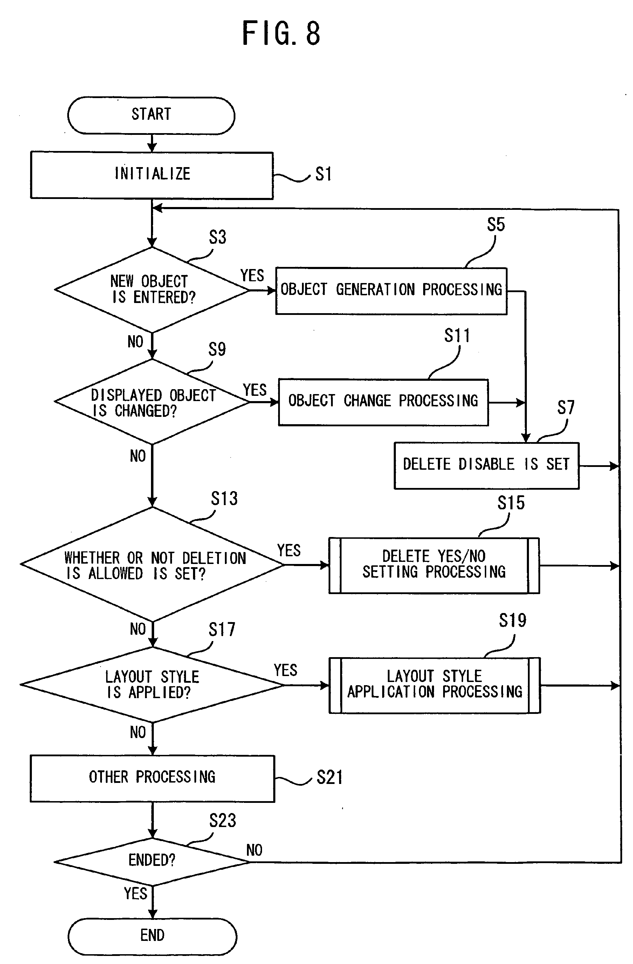

Next, the operation of the layout editing device 1 having the above-described structure will be described with reference to FIGS. 8-25.

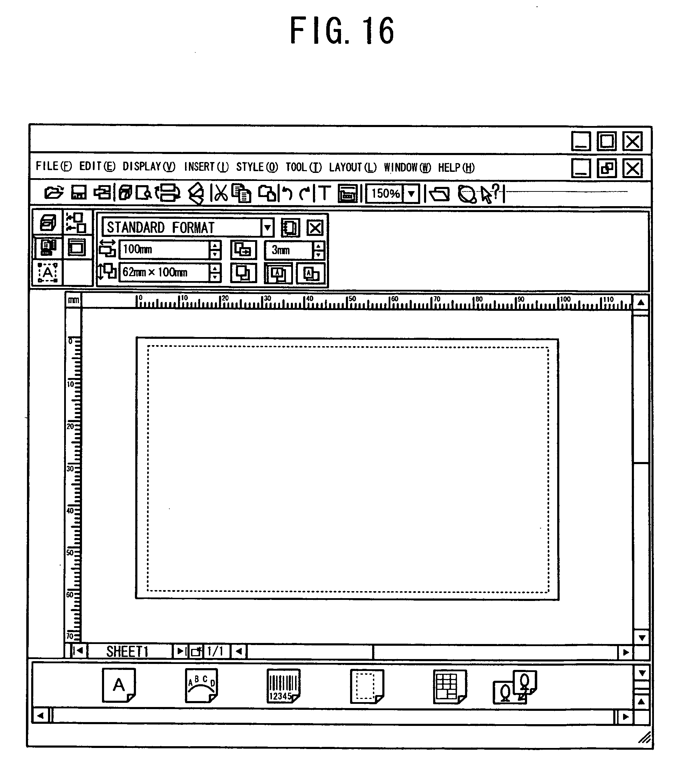

First, if the processing of the layout editing device 1 is started as shown in FIG. 8, initialization processing is carried out (S1) so that the object memory area 221 of the RAM 22 is emptied. Consequently, an initial screen is displayed as shown in FIG. 16. On the initial screen, as shown in FIG. 16, an empty image of a printing medium (for example, ordinary paper, postcard, tape and the like) is displayed in the work area. In this state, the direction of the printing object can be changed (from vertical to horizontal, from horizontal to vertical).

Next, whether an input operation for new object is carried out with the keyboard 26 or the mouse 28 is determined (S3). The input operation of a new object can be executed at any position within the work area regardless of the position indication on the printing medium. The characters can be inputted directly through the keyboard 26 or image data can be read from a file or drawn. Thus, the input can be carried out through various kinds of operations. If the input operation of the new object is carried out (S3: YES), that input is stored in the object memory area 221 within the RAM 22 and object generation processing for displaying the object within the work area of the screen is carried out (S5). Then, the delete YES/NO setting of the inputted object is stored in delete NO status (S7) and the procedure returns to S3.

Unless the input operation of the new object is executed (S3: NO), whether an operation is carried out on an object already generated and displayed in the work area is determined (S9). Various kinds of changes, such as input of data, change, application of decoration, and change of the position, can be applied to the generated object. If the change operation is executed on any object (S9: YES), the result of the operation is stored in the object memory area 221 and the object change processing of reflecting and displaying in the work area on the display screen is executed (S11). Then, the delete YES/NO setting for any inputted object is set to delete NO status and stored (S7) and the procedure returns to S3.

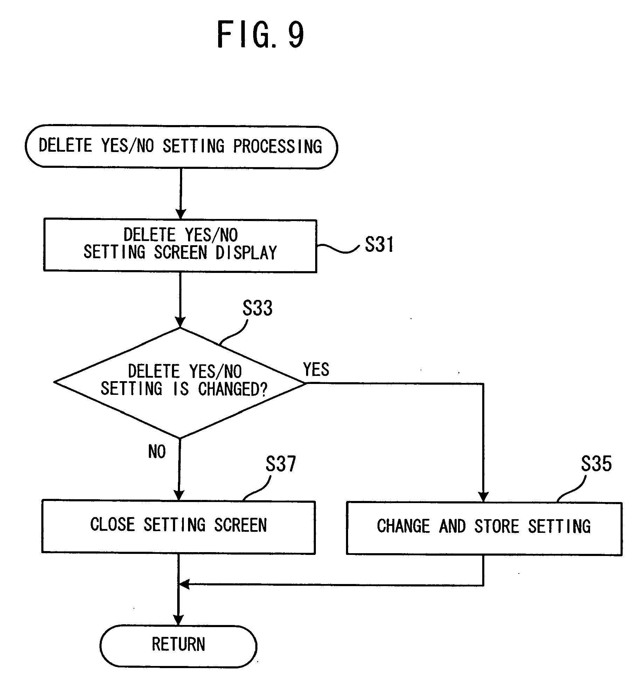

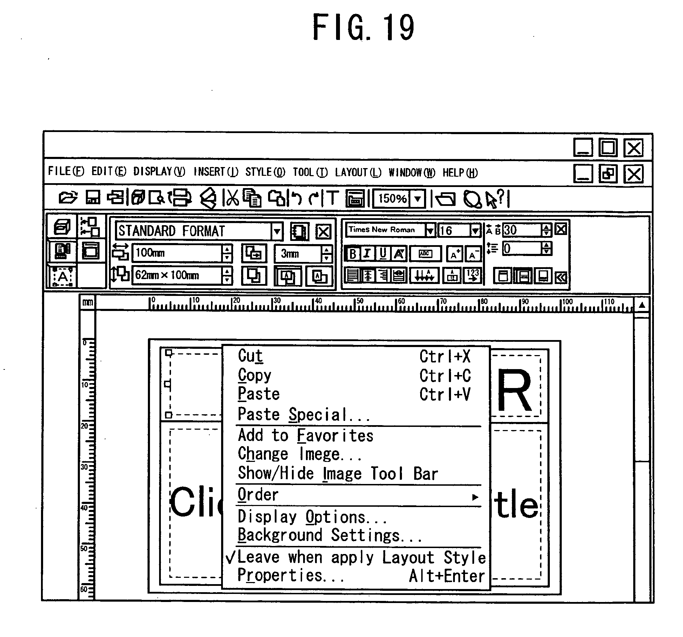

If an object change operation is not carried out (S9: NO), next, whether the setting operation of delete YES/NO is individually executed for any of the generated objects is determined (S 13). The setting of the delete YES/NO may be configured to be capable of being executed uniformly for types of objects or independently for each object. According to this embodiment, as shown in FIG. 19, the delete YES/NO is set up individually for each object. If the delete YES/NO setting is carried out (S13: YES), a setting menu is represented and the delete YES/NO setting processing, which requires a user to input, is executed (S15). The detail of the delete YES/NO setting processing will be described with reference to FIG. 9 later. Then, the procedure returns to S3.

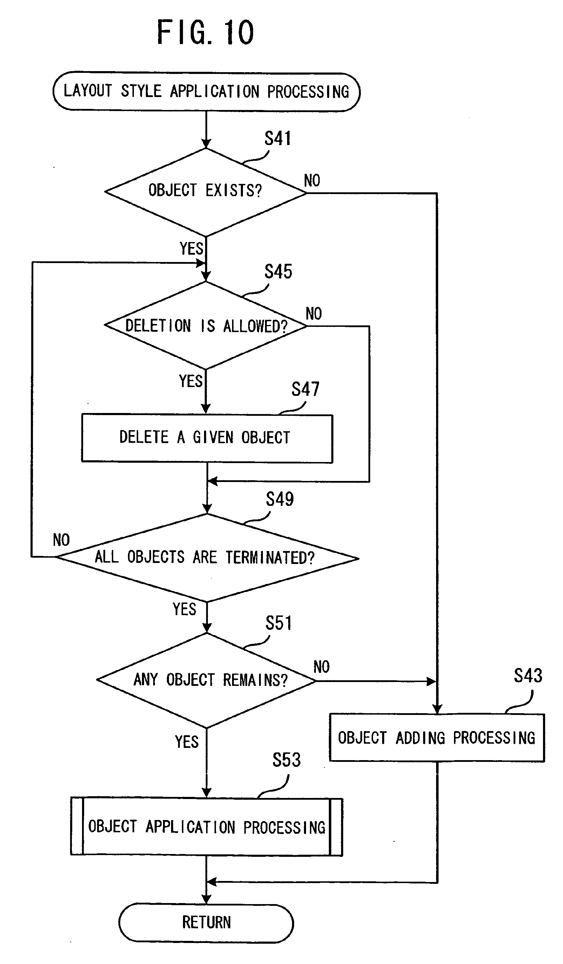

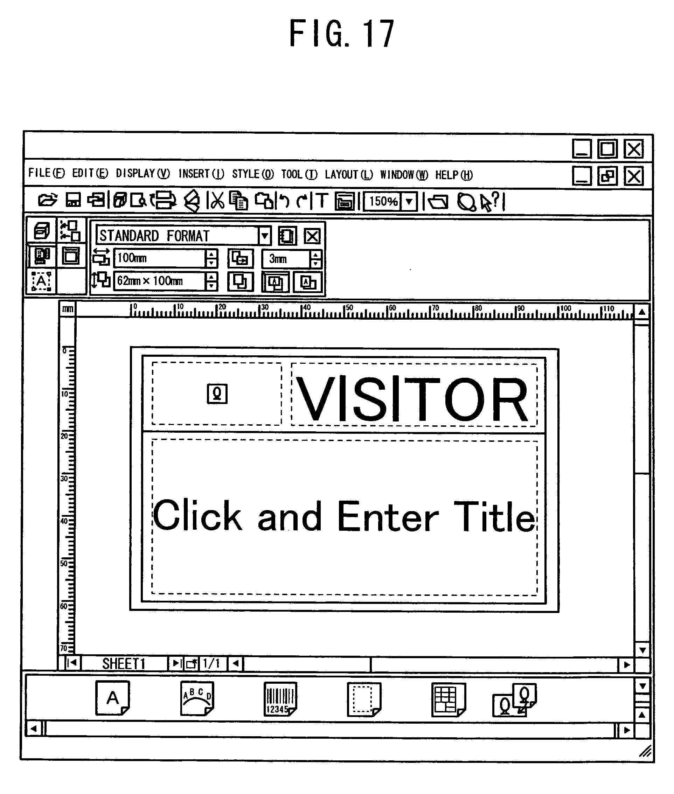

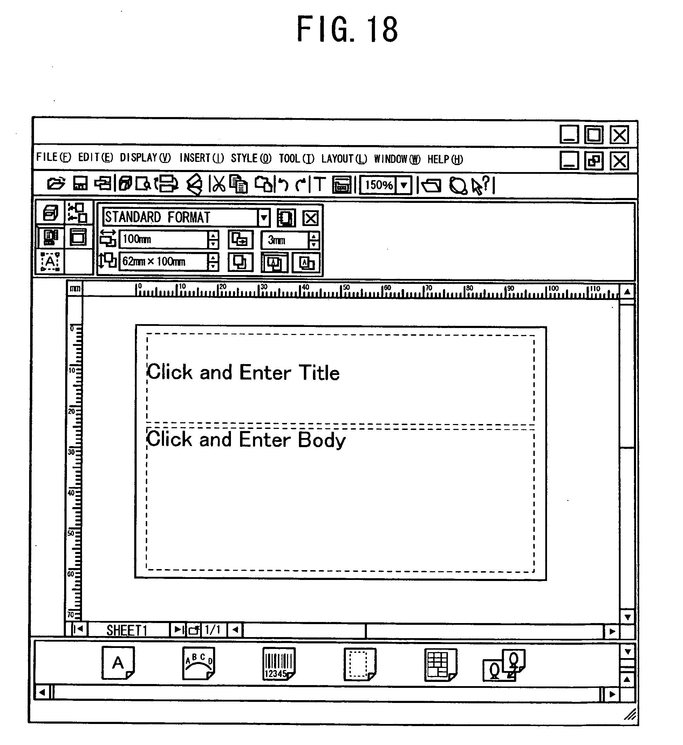

Unless the delete YES/NO setting is carried out (S 13: NO), whether the layout style application operation, for applying a layout style selected appropriately from a preliminarily prepared plurality of layout styles is executed for an object, is determined (S 17). The application of the layout style can be executed for an inputted object or can be executed in conditions in which no object is inputted. If the layout style application operation is carried out (S 17: YES), a desired layout style is read from the layout style database 32 and applied. Then the layout style application processing for displaying the object on a screen is executed (S19). For example, if a layout style having the layout style number 1, shown in FIG. 2, is applied without any inputted object, a screen indicated in FIG. 17 is displayed. If a layout style having the layout style number 2, shown in FIG. 2, is applied, a screen indicated in FIG. 18 is displayed. The detail of the layout style application processing will be described with reference to FIGS. 10-15. Then, the procedure returns to S3.

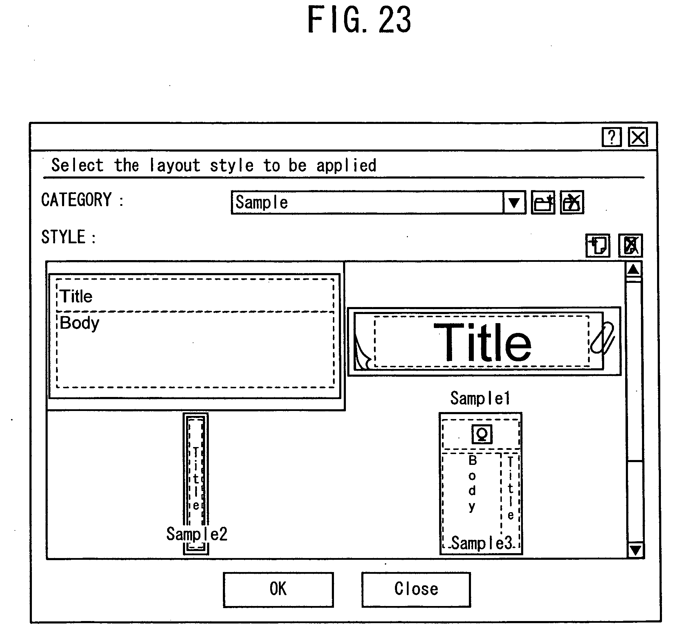

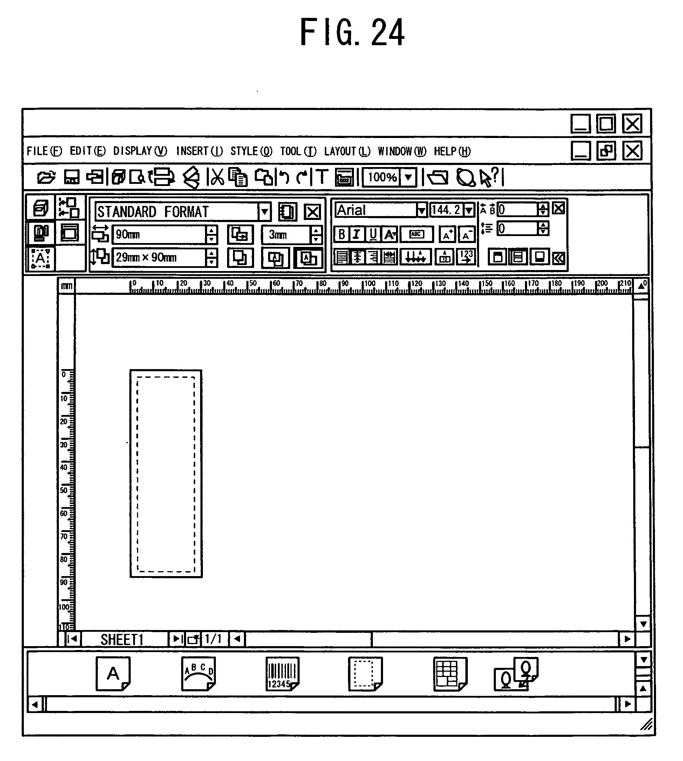

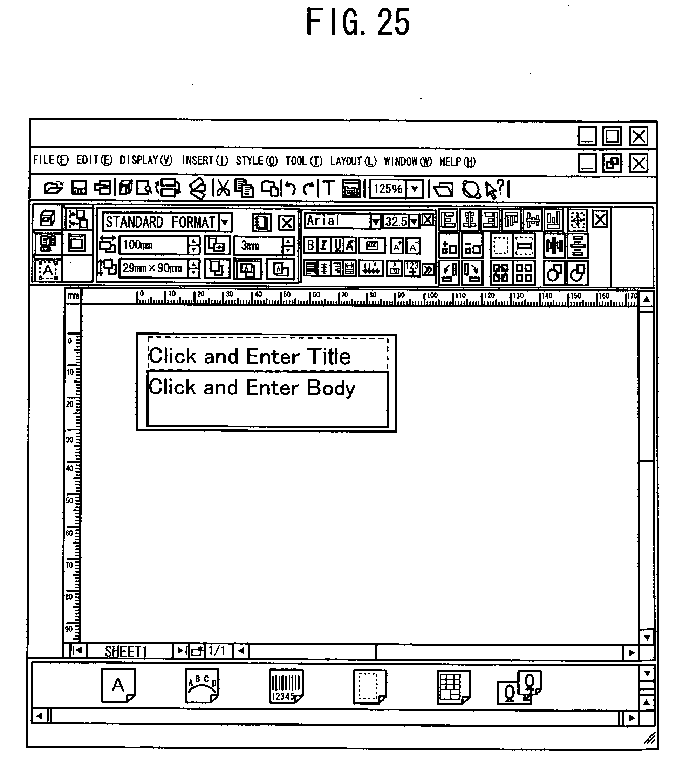

Meanwhile, when the layout style selection menu is instructed by an operator, the selection screen is displayed as shown in FIG. 23 so that a desired layout style can be selected. Here, each layout style has information about the direction indicating horizontal setting or vertical setting with respect to a printing medium (see FIG. 2). For example, if the vertical setting layout style is selected, a layout style is displayed in the work area in the vertical setting style as shown in FIG. 24. If the operator instructs the layout style selection menu from this status and selects the horizontal setting layout style this time, the printing medium is changed to the horizontal setting status as shown in FIG. 25, in which the horizontal setting layout style is displayed so that everything is accommodated. Therefore, the operator only needs to select a layout style so that the direction of the printing medium does not need to be set up corresponding to the direction of a layout style desired to be selected.

Unless the layout style application operation is carried out (S 17: NO), other processing is executed (S21) to determine whether end is selected (S23). Unless the end is selected (S23: NO), the procedure returns to S3 and if the end is selected (S23: YES), entire processing is terminated.

Next, the delete YES/NO setting processing to be executed in S15 of FIG. 8 will be described with reference to FIG. 9. First, an operation menu containing the delete YES/NO setting shown in FIG. 19 is displayed (S31). This operation menu can be displayed by an operation such as right clicking the mouse 28 on a target object.

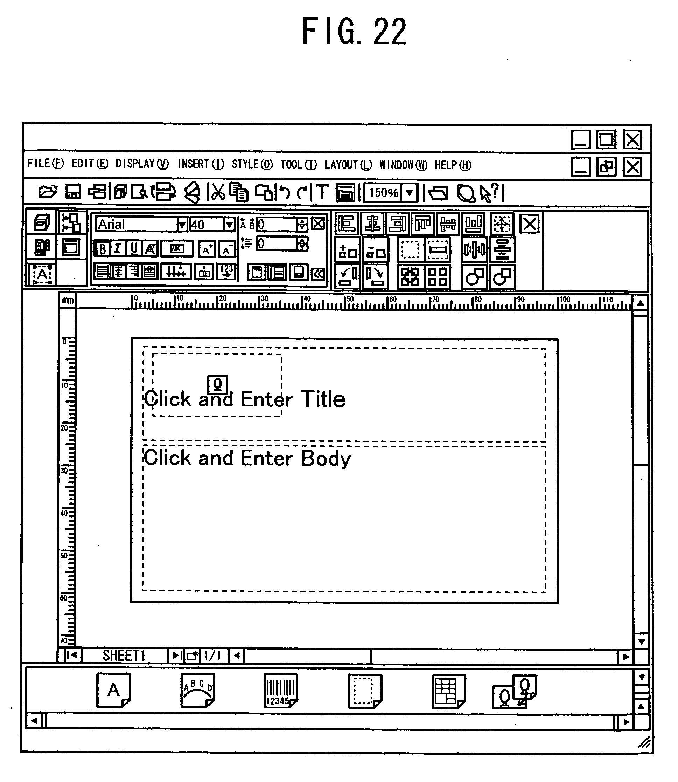

Whether the delete YES/NO setting has been changed is determined (S33). The example of FIG. 19, "Leave when apply Layout Style" is checked, indicates that this object is protected from being deleted when the layout style is applied. If the delete YES/NO setting is changed (S33: YES), either delete YES (DEL) or delete NO (KEEP) is stored as a delete YES/NO setting in the object memory area 221 (S35). Then, the procedure returns to the main routine of FIG. 8. Unless the delete YES/NO setting is changed (S33:NO), the menu is closed (S37) and the procedure returns to the main routine of FIG. 8. For example, if deletion of an image object located on the left top row of this layout (see FIG. 17) is set up to be impossible according to the delete YES/NO setting menu shown in FIG. 19, even if there is no input data in that image object, its image object area is secured and a next layout style is applied. If the layout style shown in FIG. 18 is applied under this condition, objects are disposed such that they overlap as shown in FIG. 22. After this display is made, the operator can edit to his/her desired condition by changing the disposition of each object within the layout style or the size thereof. It is permissible to make a desired layout style and additionally store it in the layout style database 32.

Although this embodiment indicates a configuration which enables the delete YES/NO setting to be made for each object, it is permissible to set up the delete YES/NO depending on the type and attribute of an object by displaying a dialog box or the like.

Next, the layout style application processing to be executed in S19 of FIG. 8 will be described with reference to FIG. 10. The layout style application processing is executed when a new layout style is selected by operating the layout style application menu regardless of whether any object is inputted into the work area. In explaining approximately, if a new layout style is selected, whether any object exists in the object memory area 221 within the RAM 22 is investigated and if any object exists, whether it may be deleted is checked. Then, after all objects allowed to be deleted are deleted, any remaining object is matched with an object contained in the layout style and the object is applied.

Specifically, as shown in FIG. 10, whether any object exists in the object memory area 221 is determined (S41). Even if an object is inputted to the object memory area 221 in conditions in which the layout style is not applied or an object is inputted after the layout style is applied or only an object area is secured by applying the layout style, that object is stored. Therefore, the state in which no object exists in the object memory area 221 is just after startup or when the operator deletes all the objects. In this state, the work area is completely empty.

Because the object delete processing does not need to be carried out if no object exists (S41: NO), object addition processing of adding an object in an applied layout style to the object memory area 221 of the RAM 22 is executed (S43) and the procedure returns to the main routine in FIG. 8.

If any object exists (S41: YES), next, the delete YES/NO setting is investigated in order from a head object in the object memory area 221 (S45). If the deletion is allowed (described as "DEL" in FIGS. 5-7), (S45: YES), that object is deleted (S47). If the deletion is inhibited (described as "KEEP" in FIGS. 5-7) (S45: NO), nothing is executed with that object left as it is and the procedure proceeds to S49. Then, whether the deletion YES/NO checks have been finished on all objects stored in the object memory area 221 is determined (S49) and, unless they are finished (S49: NO), a processing object is moved to a next object and the processing of S45, S47 is repeated.

If the deletion processing of all the objects is finished (S49: YES), whether there are any objects left in the object memory area 221 without being deleted by the processing of S45, S47 is determined (S51). If all the objects are deleted (S51: NO), the object addition processing of adding an object in a layout style which should be applied to the object memory area 221 in the RAM 22 is executed (S43) and the procedure returns to the main routine of FIG. 8.

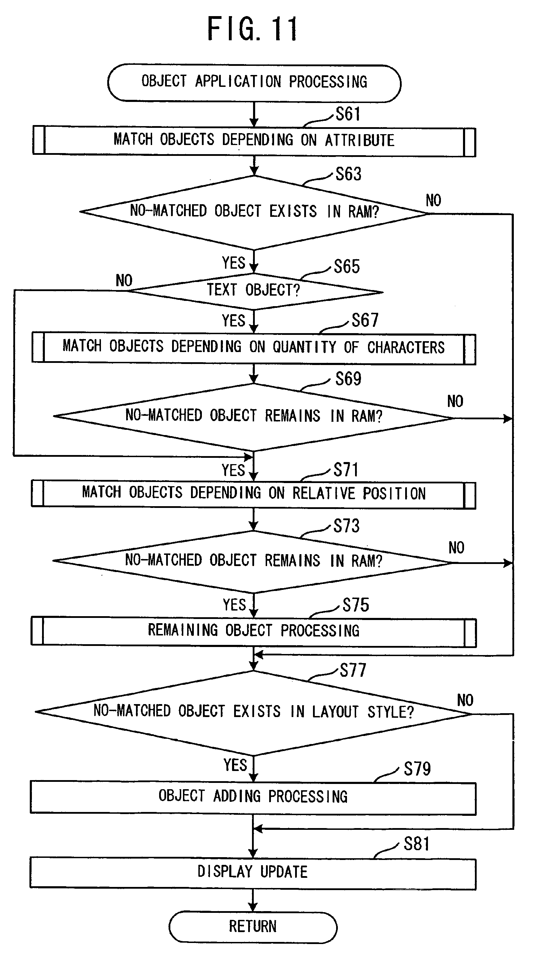

If an object is left in the object memory area 221 (S51: YES), the object application processing of matching a remaining object with an object in the layout style to be applied is executed (S53) and the procedure returns to the main routine of FIG. 8. The detail of the object application processing will be described with reference to FIGS. 11-15.

Next, the object application processing to be executed in S53 of FIG. 10 will be described with reference to FIG. 11. If an object is left in the object memory area 221, matching between objects is carried out with reference to the type of object, attribute, number of characters (in case of text object) and relative position in order to be capable of moving as smoothly to an object, contained in the layout style intended to be applied now, as possible. Although according to this embodiment, the matching between objects is carried out in order of the attribute, the number of characters and the relative position on a premise that objects of the same type are matched with each other, of course, the embodiment is not limited to this order.

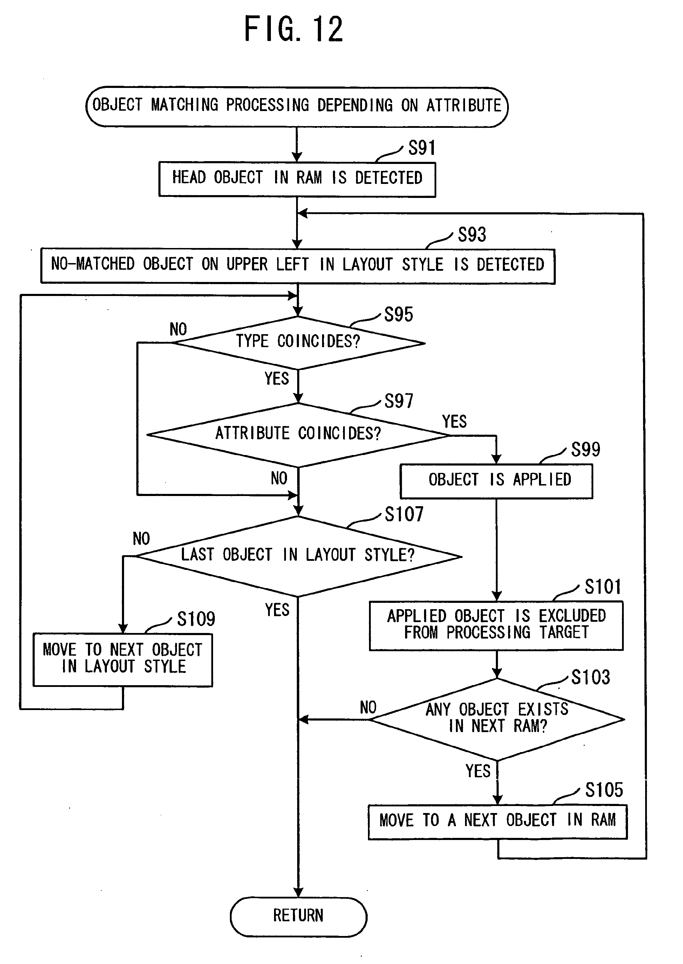

First as shown in FIG. 11, the matching between objects depending on the attribute is executed (S61). The attribute mentioned here refers to specifying modification information corresponding to the type of each object, such as text object, image object, bar code object and the like, and the type of data to be inputted to the object. For example, the text object can be considered to be used for creation of a destination address label by setting a postal code input object, an address input object and the like. If character modification along with the content of a text to be inputted is pre-stored, preferably, labor and time of the operator can be further saved. Of such attributes, typical ones may be provided in a database in the form of an attribute ID or it is permissible to adopt the field name of the database as an attribute by connecting the database to the object. The detail of the object matching processing depending on the attribute will be described later with reference to FIG. 12.

If the object matching processing depending on the attribute is finished, whether an object not matched by the processing is left in the object memory area 221 is determined (S63). If all the matching processing is completed (S63: NO), the procedure proceeds to S77 because it is not necessary to execute the matching processing depending on other items.

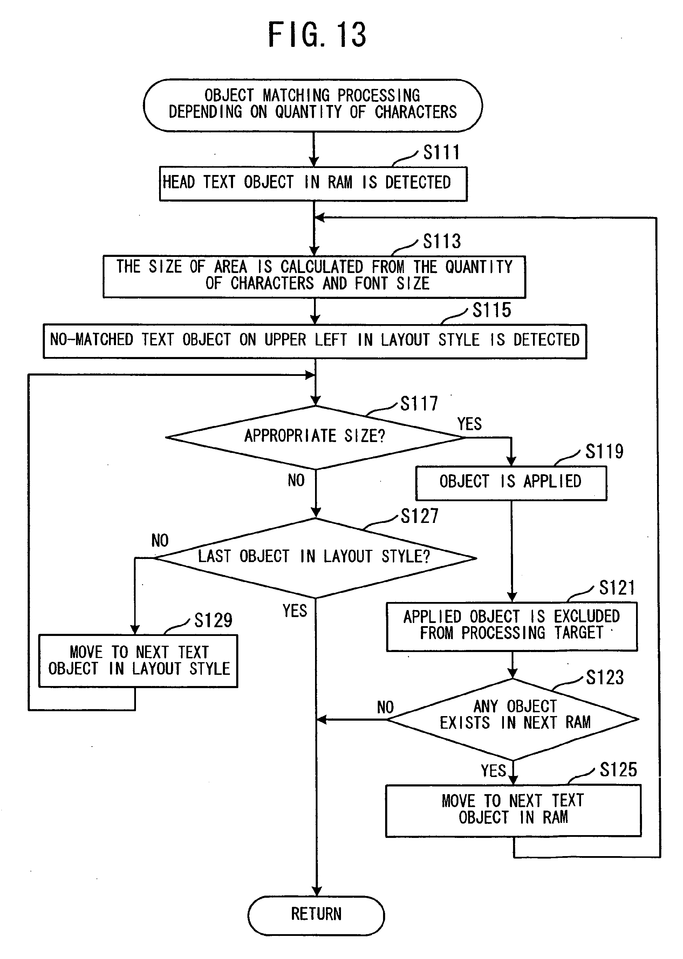

If there exists an object not treated in the object memory area 221 (S63: YES), whether a text object is contained in the not treated object is determined (S65). If a text object is so contained (S65: YES), the object matching processing, taking into account the number of characters within the object, is carried out (S67). The detail of the object matching processing depending on the number of characters will be described later with reference to FIG. 13. If the object matching processing depending on the number of characters is finished, whether there is an object left that is not matched by the object matching processing in the object memory area 221 is determined (S69). If all the object matching processing is completed (S69: NO), the procedure proceeds to S77 because it is not necessary to execute the object matching processing based on other items.

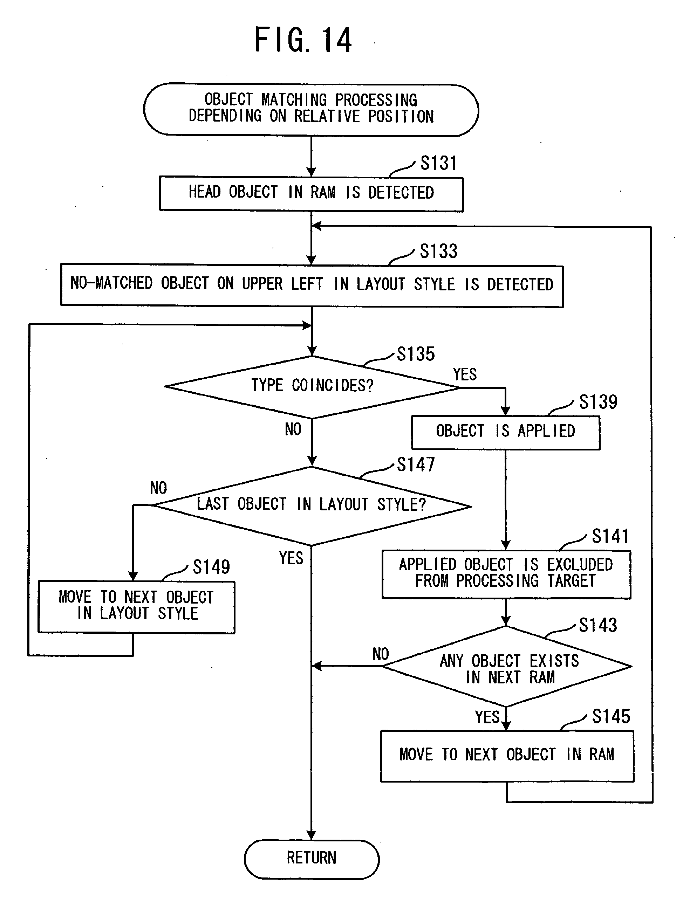

If no text object is contained in the not treated object (S65: NO) or there exists an object not treated in the object memory area 221 after the object matching processing depending on the number of characters (S69: YES), the matching processing taking into account relative positions between the not treated object in the object memory area 221 and an object in a layout style to be applied is carried out (S71). The detail of the object matching processing depending on the relative position will be described later with reference to FIG. 14.

If the object matching processing depending on the relative position is finished, whether there is an object left that is not matched by this processing in the object memory area 221 is determined (S73). If all the matching processing is completed (S73: NO), the procedure proceeds to S77.

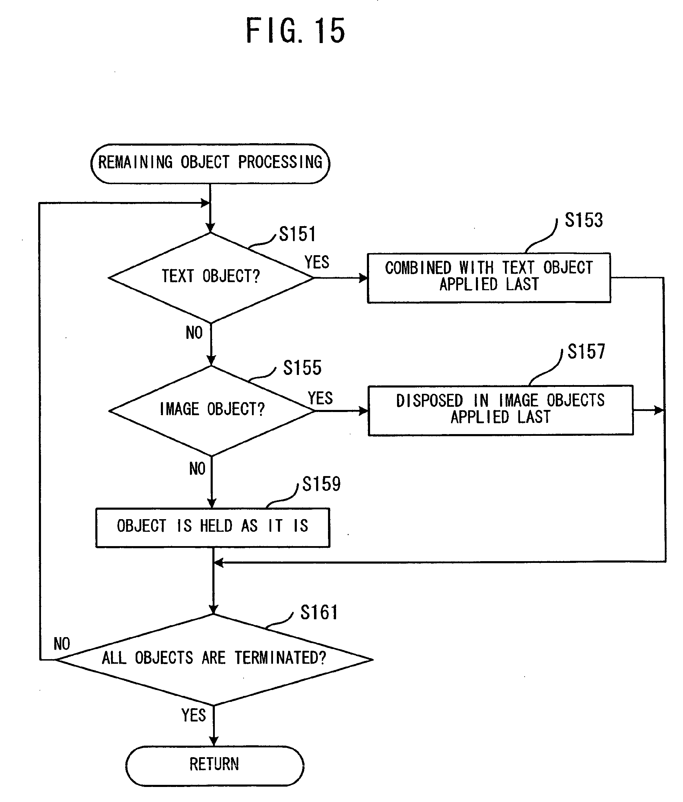

If there exists a not treated object in the object memory area 221 (S73: YES), remaining object processing for determining how the remaining object will be disposed is carried out because the quantity of objects existing in the object memory area 221 is larger than the quantity of objects of the same type for the layout style (S75). The detail of the remaining object processing will be described later with reference to FIG. 15.

After the remaining object processing is finished or if there is no not treated object left in the object memory area 221 (S63: NO, S69: NO, S73: NO), it is determined whether there is a not treated object in the layout style (S77). Because no object matching processing is carried out if the object types are different, it can be that not treated objects are left in both the object memory area 221 and the layout style. If there exists a not treated object in the layout style (S77: YES), the object addition processing of adding the not treated object according to the layout style is executed (S79). Unless there exists a not treated object in the layout style (S77: NO), the procedure proceeds to S81. Because the processing of all the objects is completed, the display in the work area is updated according to the memory content of the object memory area 221 (S81) and the procedure returns to the layout style application processing routine of FIG. 10.

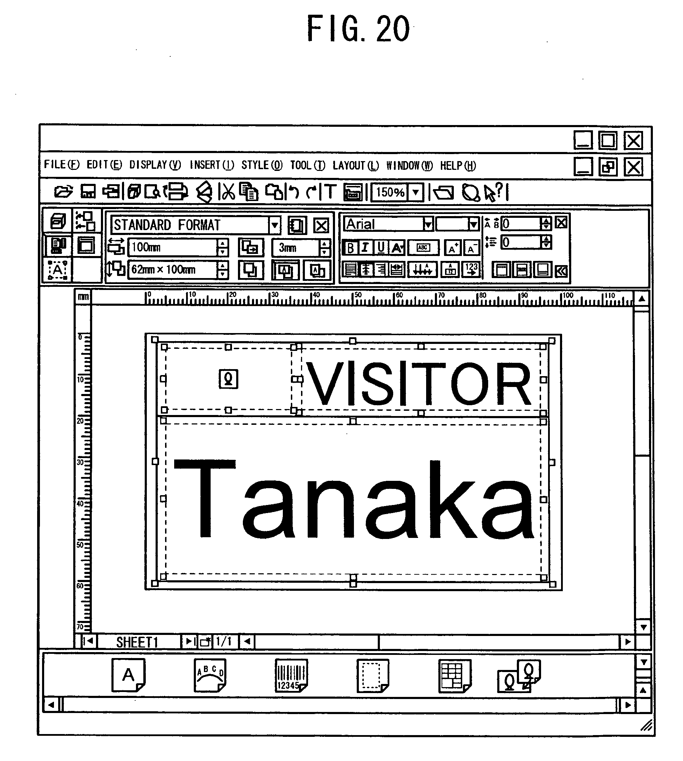

Next, the object matching processing depending on the attribute to be executed in S61 of FIG. 11 will be described with reference to FIG. 12. Of the objects stored in the object memory area 221, first, a head object is detected (S91). The order of the objects stored in the object memory area 221 is an input order or the order of disposition of objects preliminarily specified in the layout style. Next, of the not treated objects in the layout style intended to be applied, an object located at the leftmost and uppermost of the layout style is detected (S93). For example, assume a state shown in FIG. 20 in which text data "Tanaka" is inputted into a text object in the layout style shown in FIG. 17 and that it is intended to change to the layout style shown in FIG. 18. Because in this case, an object inputted by the operator is only a text object located on the bottom row, other objects are deleted in S45 and S47 of FIG. 10 and the object currently stored in the object memory area 221 is only text object containing "Tanaka", this is detected in S91. Further, because the object located at the upper leftmost in the layout style of FIG. 18 is a text object on the upper row, this is detected in S93.

Next whether the types of these two objects coincide with each other is determined (S95). Because it is assumed that objects of different types are not applied as the most prominent premise for matching objects, whether it is text object, image object, bar code object or other type object is recognized.

Unless the object types coincide (S95: NO), that object cannot be matched and thus, the procedure proceeds to S107, in which processing for checking the correspondence with object in the next layout style is executed.

If the object type coincides (S95: YES), next, whether the attributes of the objects coincide is determined (S97). As described previously, if it is desired to specify the type (for example, postal code) of data which can be inputted to an object further narrowly, only data possessed by that attribute is allowed to be inputted by setting the attribute. If the attributes coincide (S97: YES), the object is applied and matched (S99). Then, the applied object is taken out of a processing object of the next or following routines (S101).

Next, whether a not treated object exists in the object memory area 221 is determined (S103). If one still exists (S103: YES), the processing object is moved to a next object (S105). Then, the procedure returns to S93, in which the attributes of the next object are checked. When no not treated objects exist (S103: NO), the procedure returns to the object application processing routine of FIG.11.

When the attributes do not coincide (S97: NO), the object matching processing is not executed. In particular, when the attribute is not set up, the processing is carried out assuming that the attribute does not coincide. Then, whether an object in the layout style being currently processed is a last object is determined (S107). If another not treated object is contained in the layout style (S107: NO), the processing object is moved to a next object (S109). Of objects in not treated layout style, the order of moving to a next object is an object located on the leftmost and then, an object located at the uppermost. Then, the procedure returns to S95, in which whether an object being currently processed within the object memory area 221 coincides with an object in a next layout style in terms of type and attributes is checked.

Because in a last object processing within the layout style (S 107: YES), the object matching processing depending on the attribute is ended, the procedure returns to the object application processing routine of FIG. 11.

Next, the object matching processing depending on the number of characters, executed in S67 of FIG. 11, will be described with reference to FIG. 13. The object matching processing depending on the number of characters is performed only for a text object. First, of the text objects stored in the object memory area 221, a head text object is detected (S111). Then, the size of an appropriate object area is calculated from the number of characters in a text object detected in S111 and the font size of the given text object (S113). Next, of not treated text objects in the layout style intended to be applied, a text object located at the leftmost and uppermost is detected (S115).

Next, whether the size of text object in the layout style detected in S 115 is a size meeting the size calculated in S 113 is determined (S 117). More specifically, if it is within a range about 10% above and below the size calculated in S 113, it is determined that the size is appropriate. If the size is appropriate (S117: YES), that object is applied and matched (S119). Then, the applied object is excluded from the processing object to be moved to a next routine (S121).

Next, whether a not treated text object exists in the object memory area 221 is determined (S123). If one exists (S123: YES), the processing object is moved to a next text object (S125). Then, the processing returns to S113, in which the sizes of areas of next text objects are checked. When a not treated text object no longer exists (S123: NO), the procedure returns to the routine of the object application processing of FIG.11.

When the size is not appropriate (S117: NO), the object matching processing is not carried out. Then, whether a text object in a layout style being currently processed is a last text object is determined (S127). If a not treated text object is contained in the layout style (S127: NO), the processing object is moved to a next text object (S129). Here, of objects in a not treated layout style, the order of moving to a next text object is to a text object located at the leftmost and then a text object located at the uppermost. Then, the procedure returns to S117, in which the sizes of areas for the text object in the object memory area 221 currently being processed and a text object in a next layout style are checked.

If the last text object processing in the layout style is selected (S127: YES), the procedure returns to the object application processing routine of FIG. 11 because the object matching processing depending on the number of characters is finished.

Next, the object matching processing depending on a relative position, executed in S71 of FIG. 11, will be described with reference to FIG. 14. Of the objects stored in the object memory area 221, first, a head object is detected (S131). Next, of not treated objects in the layout style intended to be applied, an object located at the leftmost and uppermost is detected (S133).

Next, whether the types of these two objects coincide is determined (S135). Because it is assumed that any object of a different type is not applied as a prominent premise for matching objects, whether it is a text object, image object, bar code object or other type object is recognized.

If the type of the object coincides (S135: YES), that object is applied and matched (S139). The applied object is excluded from a processing object for a next and following routines (S141). Next, whether a not treated object exists in the object memory area 221 is determined (S143). If an object still exists (S143: YES), the processing object is moved to a next object (S145). Then, the procedure returns to S133, in which the attributes of next objects are checked. When no not treated objects exists (S143: NO), the procedure returns to the routine of the object application processing routine of FIG.11.

If the type of an object does not coincide (S135: NO), that object cannot be matched, and whether an object in a layout style being currently processed is a last object is determined (S 147). If a not treated object is contained in the layout style (S 147: NO), the processing object is moved to the next object (S149). Here, the order of moving to a next object is, like the cases of FIGS. 12, 13, from an object located at the leftmost of objects in the layout style not treated to an object located at the uppermost. Then, the procedure returns to S135, in which whether the type of an object in the object memory area 221 being currently processed coincides with an object in a next layout style is checked.

If the last object in the layout style is selected (S147: YES), the procedure returns to the object application processing routine of FIG. 11 because the matching processing depending on the relative position is finished.

Next, the remaining object processing, executed in S75 of FIG. 11, will be described with reference to FIG. 15. The remaining object processing is carried out if a not treated object of the same type is not left in the layout style although a not matched object still exists in the object memory area 221.

The processing is executed from the head object not treated within the object memory area 221. As shown in FIG. 15, whether the object is a text object is determined (S151). If the object is a text object (S151: YES), it is combined with a last applied text object (S153). Then, the procedure proceeds to S161 in which whether the processing on all objects is completed and if the processing of all the objects is not completed (S161: NO), the procedure returns to S 151, and if the processing of all the objects is completed (S161: YES), the procedure returns to the object application processing routine of FIG. 11.

If the object is not a text object (S151: NO), next it is determined whether the object is an image object (S155). If the object is an image object (S155: YES), it is arranged and displayed in the area of a last applied image object (S157). Then, the procedure proceeds to S161, in which it is determined whether the processing of all objects is finished. When the processing of all the objects is not completed (S161: NO), the procedure returns to S151 and when the processing of the all objects is completed (S161: YES), the procedure returns to the object application processing routine of FIG. 11.

If the object is not an image object (S155: NO), that is, it is another object, for example, a bar code object, it is not applied to an object in the layout style but that object is held (S159). In the meantime, it is possible, in advance, to set up an application method for another type object. Then, the procedure proceeds to S161, in which whether the processing of all objects is determined as completed. If the processing of all the objects is not completed (S 161: NO), the processing returns to S151. If the processing of all the objects is completed (S161: YES), the procedure returns to the object application processing routine of FIG. 11.

Next, the layout application processing will be described further regarding a specific example. Now assume a state of FIG. 20 in which text data "Tanaka" is inputted to text object in the layout style shown in FIG. 17 and in which it is intended to change to the layout style shown in FIG. 18.

Here, a layout style application operation is detected in S 17 of FIG. 8 (S 17: YES) and the layout application processing is executed (S 19). If the processing is moved to the subroutine of FIG. 10, an object of the layout style 1 is stored in the object memory area 221 (S41: YES). If whether each object can be deleted is determined (S45), because only the text object in which the input data "Tanaka" exists cannot be deleted, the other image object and text object are deleted (S47).

Because the text object containing "Tanaka" still exists in the object memory area 221 (S51: YES), the object application processing is executed (S53). Then, the procedure moves to the subroutine of FIG. 12.

Assuming that any attribute is not set up for this text object, although the text object containing "Tanaka" detected in the subroutine of FIG. 12 (S91) and an object located at the leftmost and uppermost in the layout style (S93) are both text objects and coincide with each other in terms of type (S95: YES), it is determined that their attributes do not coincide (S97: NO). Then, the processing object is moved to an object in a next layout style (S109) and because the text object on the lower row (see FIG. 18) is also a text object, it coincides in terms of the type with a text object containing "Tanaka" which is currently a processing object (S95: YES) and it is determined that their attributes do not coincide (S97: NO). Then, because no object exists in the layout style any more (S107: YES), the procedure returns to FIG. 11 after the subroutine of FIG. 12 is finished.

When the processing returns to FIG. 11, because the text object containing "Tanaka" is left in the object memory area 221 as a not treated object (S63: YES) and it is a text object (S65: YES), the matching processing depending on the number of characters is executed (S67). Then, the procedure moves to the subroutine of FIG. 13, in which the size of an appropriate area is calculated from the number of characters in the text object containing "Tanaka" and its font size (S113). Then, if looking at the size of the area of the object located at the leftmost and uppermost in the layout style (S115), because the font size is small and the number of characters is not large, it is determined that it is too large for the character string "Tanaka" and not appropriate (S117: NO). If the procedure is moved to the text object in a next layout style (S129), it is determined that the size of the text obj ect (see FIG. 18) on the lower row is too large (S117: NO). Because no object exists in the layout style (S127: YES), the procedure returns to FIG. 11 after the subroutine in FIG. 13 is finished.

Returning to FIG. 11, because the text object containing "Tanaka" is left in the object memory area 221 as a not treated object (S69: YES), the object matching processing depending on the relative position is carried out (S71). Then, the procedure is moved to the subroutine of FIG. 14. Because the text object containing "Tanaka" (S131) and the object located at the leftmost and uppermost in the layout style (S133) coincide with each other in terms of text object (S135: YES), the object is applied (S139). Then, the applied object is excluded from a processing object as a matched object (S141). Because a not treated object does not exist in the object memory area 221, the procedure returns to FIG. 11 after the subroutine of FIG. 14 is finished.

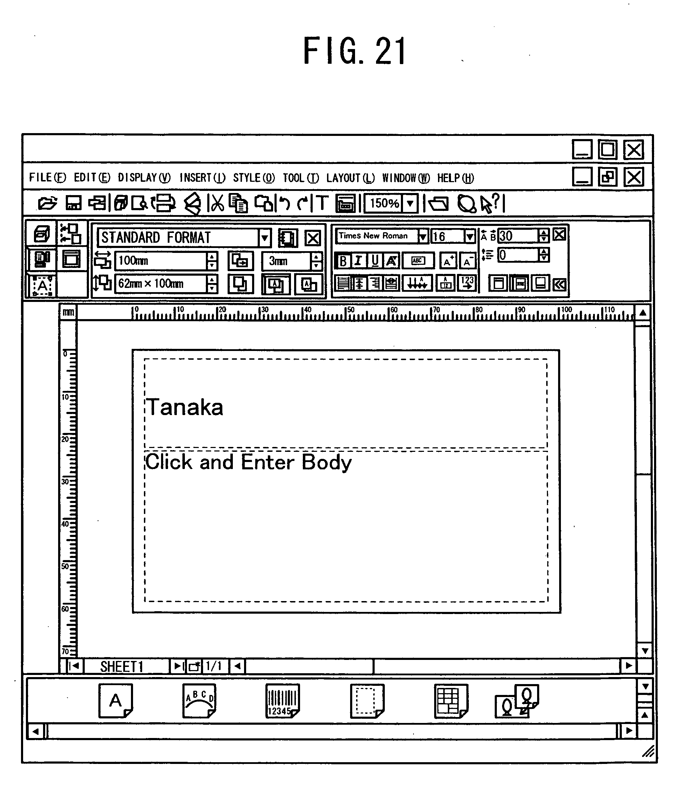

Because a not treated object does not exist in the object memory area 221 (S73: NO), when a not treated object is left in the layout style (S77), this is added to the object memory area 221 (S79) because the text object on the lower row remains (see FIG. 18). Then, the display update is executed (S81). As a result, as shown in FIG. 21, a print image, disposed by applying an object of the layout style to inputted data, is displayed in the work area.

Although in the above-described embodiment, the object matching processing is carried out depending on the attribute, number of characters and relative position, the object matching processing does not always need to be executed considering all the factors but it is permissible to execute only the object matching processing depending on the relative position in order to configure the operation more simply. In this case, only the subroutines of FIGS. 14 and 15 are executed in S71 and following in the subroutine of the object application processing of FIG. 11. If the object matching processing depending on the relative position is carried out, according to this embodiment, an object located on the left side is taken as the top priority and an object located at the upper position is taken as a next priority. Therefore, this embodiment can be carried out preferably if selectable objects are disposed laterally.

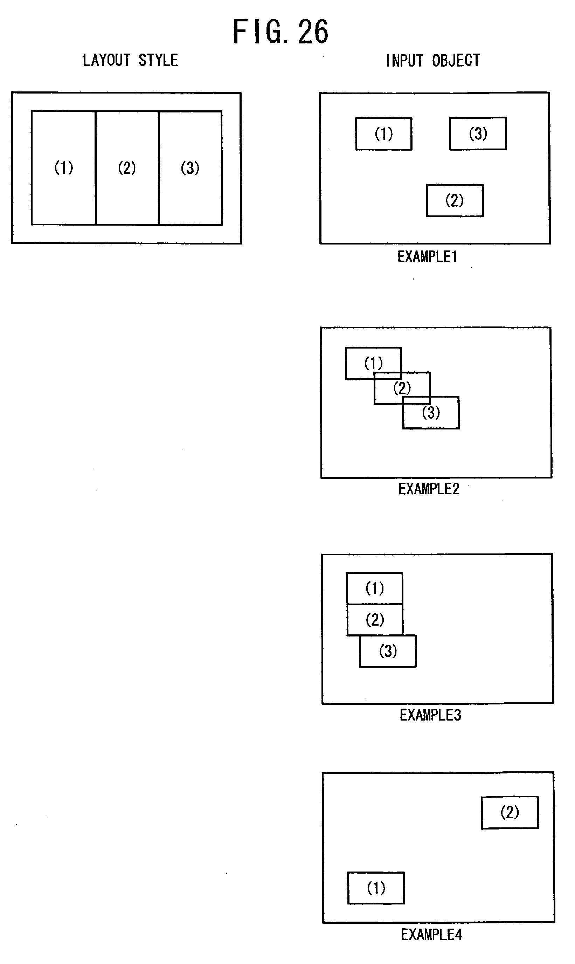

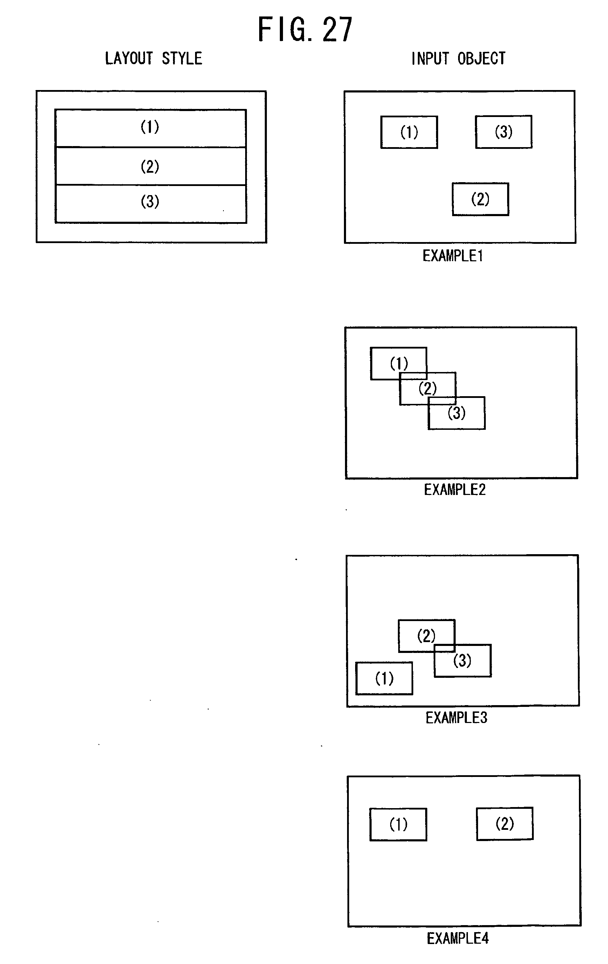

Specific examples of the object matching processing depending on the relative position will be described with reference to FIGS. 26 and 27. If the layout style indicated on the left side is adopted as an example for the disposition of the input objects as indicated on the right side in FIG.26, the matching of objects is carried out as shown with the number indicated in those objects on the right side. That is, an object (1) disposed to the leftmost is applied to an object (1) in the layout style and an object of (2) disposed at the middle is applied to an object (2) in the layout style and an object of (3) disposed to the rightmost is applied to an object (3) in the layout style. Because it can be considered that the result of arrangement by the above-described matching is a result reflecting an intention of an entry person, a desired print result can be obtained without any large-scale editing after the layout style is applied.

If the layout style indicated on the left side is applied to an example of the disposition of the input objects as shown on the right side of FIG. 27, the matching of the objects is carried out following the numbers indicated in the objects shown on the right side. That is, an object of (1) disposed on the upper row is applied to an object (1) within the layout style, an object of (2) disposed on the middle row is applied to an object (2) in the layout style and an object of (3) disposed on the lower row is applied to an object (3) in the layout style. This matching result can be considered to indicate a lower degree in reflection of entry person's intention as compared to the case of FIG. 26. Thus, if the matching rule is changed so that an object located at upper position on coordinates is taken as the top priority while an object located at the left side is taken as a next priority, the layout style can be applied in a state near the input by a user. In this way, the embodiment can be so configured that the matching rule can be set up depending on a user.

As described above, the layout editing device does not always delete an object being displayed when the layout style is applied but determines whether the deletion is allowed by the delete YES/NO determining means and then, deletes only an object allowed to be deleted when the layout style is applied according to its determination result. Therefore, it is capable of controlling corresponding to an operating condition or an object instead of such a control of deleting or keeping uniformly.

Further, it is permissible that the layout style stored in the layout style memory contains the attribute information of the object and includes the attribute changing means for changing an attribute of an object disposed by the disposing means according to the attribute information and the display control means displays an object according to the attribute changed by the attribute changing means. Because the layout style contains the attribute information as well as the disposition information, a user can grasp a print image easily by displaying it.

The delete YES/NO determining means may determine whether a given object should be deleted based on the type of the object. Because this determines whether the object should be deleted based on the characteristic of that object in this case, the availability by a user can be improved.

Further, it is permissible to provide the embodiment with the delete YES/NO setting means which sets whether an object displayed on the display should be deleted when a layout style is selected by the selecting means and for the delete YES/NO determining means to determine whether the object should be deleted according to a setting by the delete YES/NO setting means. Because whether the deletion is allowed can be determined by a user setting, the processing when the layout style is applied can be carried out corresponding to individual user's desire.

The delete YES/NO setting means may be set to be capable of setting whether the object is deleted depending on each type of object. Because this enables a user to freely set up a type of an object to be deleted, the processing when the layout style is applied can be executed corresponding to individual user's desire.

The delete YES/NO setting means may be set to be capable of determining whether an individual object displayed on the display should be deleted. Because this enables an object which a user wants to keep to be specified individually, the processing when the layout style is applied can be executed corresponding to an individual user's desire.

Further, it is permissible to provide the embodiment with the matching means, which matches an object contained in a layout style selected by the selecting means with an object stored in the object memory, for the disposing means to dispose an object stored in the object memory according to the disposition information of a corresponding object based on a matching relationship by the matching means and for the object adding means to add an object not matched by the matching means. Consequently, if the layout style is applied when an object is already inputted, labor and time for user's input can be reduced by matching an object contained in the layout style with an already inputted object when the layout style is changed.

The matching means may match, based on a position relationship, among a plurality of objects stored in the object memory and a position relationship between objects contained in a selected layout style. Because the object contained in the layout style is matched with the inputted object from the relative position relationship consequently, this can be executed more easily as compared to a case where the matching is instructed from the beginning so that if a user inputs rough positions of the objects, they are disposed by estimation of the position relationship of the objects.

If an object composed of a character string is stored in the object memory, the matching means may match, based on the quantity of characters in the character string, object and the size of an area of the character string object contained in a selected layout style. Consequently, in the case of the character string object, a wide area can be allocated so that the characters are easily visible if the quantity of characters is large.

Further, the device 1 can have an input order memory 222 (shown in dashed lines in Fig. 1) for storing the input order of objects and for the matching means to match based on the input order stored in the input order memory 222. Consequently, by disposing objects in order from the inputted one successively and from the upper left object as indicated in the embodiments, the layout style can be changed more easily to the inputted objects than a case where disposition of the inputted objects is instructed individually.

The device can also be provided with the quantity comparing means for comparing the quantity of the character string objects stored in the object memory with the quantity of the character string objects contained in a selected layout style and combining means for, if the quantity comparing means determines that the quantity of the character string objects stored in the object memory is larger, combining the character strings of the plurality of character string objects stored in the object memory and the disposing means may dispose the character strings combined by the combining means in a single object. Consequently, if the quantity of the character string objects contained in the layout style is smaller than the quantity of the inputted character string objects, the character strings are combined. Because this method allows the inputted character strings to be disposed in the layout instead of deleting excess character strings or placing outside of the layout, labor and time for input and editing can be reduced.

Further the quantity comparing means for comparing the quantity of image objects stored in the object memory with the quantity of image objects contained in the layout style is provided. If the quantity comparing means determines that the quantity of the image objects stored in the object memory is larger, the disposing means may dispose a plurality of image objects stored in the object memory within a single image object area. Consequently, if the quantity of the image objects in the layout style is smaller than the quantity of the inputted image objects, a plurality of inputted image objects are disposed within a single image object area. Because this allows the inputted image objects to be disposed within the layout more easily than a case where the excess image data is deleted or placed outside of the layout, the labor and time for input and editing after that can be reduced.

The layout editing device deletes objects added by the object adding means when applying the layout style because the added object does not contain the content (data) of an object inputted by a user. However, if data is inputted to such an object after the layout is applied, or the disposition and attribute of the object are changed, any object having a prior operator history is kept from being deleted by checking whether any data is inputted. Therefore, because the layout style is applied by respecting the operation by a user, a user does not need to operate in the same procedure repeatedly thereby improving convenience of use.

The input YES/NO memory control means may store that an input is caused when at least any one of an input of the disposition information of the objects, an input of the attribute information of the objects, and an input of data into the object is executed. Consequently, because whether the operation is performed is checked as well as whether data is inputted, it is permissible to add an empty object to a new layout.

The layout editing program does not always delete a displayed object when the layout style is applied but by determining whether the deletion is permitted with the delete YES/NO determining means, deletes only an object permitted to be deleted when the layout style is applied according to the determination result. Therefore, this method enables control depending on an operating condition and object rather than control for deleting or leaving uniform.

The layout style stored in the layout style memory contains the attribute information of the object and it is permissible to make a computer execute the attribute changing step for changing the attribute of an object disposed in the disposing step according to the attribute information and make the display control step display objects according to the attribute changed by the attribute changing step. Because, consequently, the layout style contains the attribute information as well as the disposition information, a user can understand the print image easily by displaying it.

In the delete YES/NO determining step, whether a given object should be deleted may be determined based on the type of the object. Consequently, whether that object is deleted based on the characteristic of the object is determined thereby improving the convenience of a user.

Further, the computer can be made to execute the delete YES/NO setting step of setting whether an object displayed on the display is deleted in a case where a layout style is selected by the selecting step and in the delete YES/NO determining step, it is permissible to determine whether the object is deleted according to a setting by the delete YES/NO setting step. Consequently, whether the deletion is allowed can be determined by a user's setting so that a processing for applying the layout style can be executed according to an individual user's desire.

The delete YES/NO setting step allows setting whether any object can be deleted depending on the type of the object. Consequently, a user can set up the type of object to be deleted so that the processing for applying the layout style can be executed corresponding to an individual user's desire.

The delete YES/NO setting step allows setting whether an individual object displayed on the display can be deleted. Consequently, a user can specify each object which he/she wants to keep, so that the processing for applying the layout style can be executed corresponding to the individual user's desire.

Further, the computer can be made to execute the object matching step of matching an object contained in a layout style selected by the selecting step with an object stored in the object memory and that, in the disposition step, the objects stored in the object memory are disposed according to the disposition information of corresponding objects based on the matching relationship of the matching step and that the object addition step is allowed to add any object not matched by the matching step. In this way, if a layout style is applied when an object is already inputted, the labor and time of a user can be reduced when the layout style is changed by matching an object contained in the layout style with an inputted obj ect.

The matching step allows matching to be carried out based on the position relationship among a plurality of objects stored in the object memory and the position relationship between objects contained in the selected layout style. Consequently, matching between an object contained in the layout style and an inputted object is executed based on the relative position relationship and thus, this is easier than a case of instructing the matching from the beginning. If a user inputs an object at an approximate position, its relationship is picked up and the object is disposed conveniently.

If an object, composed of a character string, is stored in the object memory, the matching step allows matching to be carried out based on the quantity of characters in the character string object and the size of the area of the character string object contained in a selected layout style. Consequently, in the case of the character string object, if the quantity of characters is large, a wide area is allocated so that characters can be made easily visible.

The matching step allows the matching to be carried out based on the input order of objects stored in the input order memory. Consequently, because objects are disposed in the order of their inputs successively from the upper left one as indicated in the respective embodiments, the layout style can be changed with respect to the inputted object more easily than when the disposition of the inputted objects is instructed individually.

Further, the computer may execute the quantity comparing step of comparing the quantity of character string objects stored in the object memory with the quantity of character string objects contained in a selected layout style and the combining step of, when it is determined that the quantity of the character string objects stored in the object memory is larger in the quantity comparing step, combining the character strings of a plurality of character string objects stored in the object memory and in the disposition step, character strings combined by the combining step may be disposed in a single object. Consequently, if the quantity of the character string objects contained in the layout style is smaller than the quantity of the inputted character string objects, the character strings are combined. Because the inputted character strings can be disposed within the layout, labor and time for input and editing can be reduced more than when deleting excess character strings or placing out of the layout.

The computer may execute the quantity comparing step of comparing the quantity of image objects stored in the object memory with the quantity of image objects contained in a selected layout style and in the disposition step, if it is determined that the quantity of the image objects stored in the object memory is larger, a plurality of image objects stored in the object memory may be disposed in a single image object area. Consequently, if the quantity of the image objects in a layout style is smaller than the quantity of inputted image objects, the plurality of inputted image objects can be disposed in a single image object area. Because the inputted image objects can be disposed within the layout, labor and time for input and editing can be reduced more than by deleting excess image data or placing out of the layout.

According to the layout edition program, an object added by the object adding means when applying the layout style is deleted because it does not have the content (data) of an object inputted by a user. However, if data is inputted to such an object after the layout is applied or the disposition or attribute of the object is changed, any object having a history of being operated by a user is not deleted by checking whether an input is made. Therefore, because the layout style is applied by respecting the operation of a user, a user does not need to operate in the same procedure repeatedly thereby improving convenience of use.

The input YES/NO memory control step may store that an input is caused when at least any one of an input of the disposition information of the objects, an input of the attribute information of the objects, and an input of data into the object is executed. Consequently, because whether the operation is performed is checked as well as whether data is inputted, it is permissible to add an empty object to a new layout.

Although the description has been with reference to exemplary embodiments, it is to be understood the disclosure is not limited to the exemplary embodiments or structures. Although the various elements of the exemplary embodiments are shown in various combinations and configurations, other combinations and configurations, including more, less or only a single element, are also within the spirit and scope of the disclosure.

## Claims

1. A layout editing device, comprising:
an object memory that stores an object to be printed;
a display that displays the object stored in the object memory;
a layout style memory that stores a layout style containing at least disposition information for specifying a position in which the object is to be disposed;
selecting means for selecting a layout style for use from a plurality of layout styles stored in the layout style memory;
disposing means for disposing objects stored in the object memory based on a layout style selected by the selecting means;
object adding means for, if the layout style selected by the selecting means contains disposition information of objects other than the objects disposed by the disposing means, adding the objects based on the disposition information;
display control means for controlling the display of an object disposed by the disposing means and an object added by the object adding means on the display; and
delete YES/NO determining means for, when a layout style is selected by the selecting means, determining whether an object displayed on the display is deleted; and
deleting means for, when a new layout style is selected by the selecting means, deleting an object that is determined possible to delete by the delete YES/NO determining means, wherein the object adding means, after the object is deleted by the deleting means, adds an object.

2. The layout editing device according to claim 1, wherein the layout style stored in the layout style memory includes the attribute information of the object, and further comprising attribute changing means for changing the attribute of an object disposed by the disposing means according to the attribute information, the display control means controlling the display of an object according to an attribute changed by the attribute changing means.

3. The layout editing device according to claim 1 or 2, wherein the delete YES/NO determining means determines whether a given object is deleted based on the type of the object.

4. The layout editing device according to one of claims 1 to 3, further comprising delete YES/NO setting means for setting whether an object displayed on the display is deleted when a layout style is selected by the selecting means, wherein the delete YES/NO determining means determines whether the object is deleted according to a setting by the delete YES/NO setting means.

5. The layout editing device according to claim 4, wherein the delete YES/NO setting means is capable of setting whether the object is deleted depending on each type of object and/or
wherein the delete YES/NO setting means is capable of setting whether each of individual objects displayed on the display is deleted.

6. A layout editing device, comprising:
input means for inputting an object to be printed;
an object memory that stores the object inputted by the input means;
a display that displays the object stored in the object memory;
a layout style memory that stores a layout style containing at least disposition information for specifying the position in which the object is to be disposed;
selecting means for selecting a layout style for use from a plurality of layout styles stored in the layout style memory;
disposing means for disposing an object stored by the object memory based on a layout style selected by the selecting means;
object adding means for, if the layout style selected by the selecting means includes disposition information of objects other than the object disposed by the disposing means, adding an object based on the disposition information;
display control means for controlling display of an object disposed by the disposing means and an object added by the object adding means on the display;
input YES/NO memorizing means for memorizing whether each object is an object inputted by the input means;
input YES/NO memory control means for making the input YES/NO memorizing means store that an input occurs when the input is made to an object by the input means; and
deleting means for, if a new layout style is selected by the selecting means, deleting any object whose input is not stored in the input YES/NO memorizing means, wherein the object adding means, after the object is deleted by the deleting means, adds an object.

7. The layout editing device according to claim 6, wherein the input YES/NO memory control means stores that an input occurs when at least one of an input of disposition information to the object, an input of the attribute information of the object and a data input to the object is executed.

8. The layout editing device according to one of claims 1 to 7, further comprising matching means for matching an object contained in a layout style selected by the selecting means with an object stored in the object memory, wherein the disposing means disposes objects stored in the object memory according to the disposition information of corresponding objects based on a matching relationship by the matching means and the object adding means adds an object not matched by the matching means.

9. The layout editing device according to claim 8, wherein the matching means executes object matching based on a position relationship among a plurality of objects stored in the object memory and a position relationship between objects contained in a selected layout style and/or
wherein the matching means, if an object comprised of a character string is stored in the object memory, executes object matching based on the quantity of characters in the character string object and the size of the area of a character string object contained in a selected layout style.

10. The layout editing device according to claim 8 or 9, further comprising an input order memory that stores the input order of objects wherein the matching means executes object matching based on the input order stored in the input order memory.

11. The layout editing device according to one of claims 1 to 10, further comprising:
quantity comparing means for comparing a quantity of character string objects stored in the object memory with a quantity of character string objects contained in a selected layout style; and
combining means for, if the quantity comparing means determines that the quantity of the character string objects stored in the object memory is larger, combining the character strings of a plurality of character string objects stored in the object memory, wherein the disposing means disposes the character string combined by the combining means in a single object and/or
quantity comparing means for comparing a quantity of image objects stored in the object memory with a quantity of image objects contained in a selected layout style, wherein the disposing means, if the quantity comparing means determines that the quantity of image objects stored in the object memory is larger, disposes a plurality of image objects stored in the object memory within the area of a single image object in order.

12. A layout editing device, comprising:
a first memory that stores an object to be printed;
a display that displays the object stored in the first memory;
a second memory that stores a layout style containing at least disposition information for specifying a position in which the object is to be disposed;
a selecting device that selects a layout style for use from a plurality of layout styles stored in the second memory; and
a controller that disposes objects stored in the first memory based on a layout style selected by the selecting device,
if the layout style selected by the selecting device contains disposition information of objects other than the disposed objects, adds an object based on the disposition information and displays the disposed object and the added object on the display, the controller determining whether an object displayed on the display is deleted when a layout style is selected by the selecting device, deleting an object determined to be permitted to be deleted if a new layout style is selected by the selecting device, and adding an object based on the disposition information after the object is deleted.

13. The layout editing device according to claim 12, wherein the layout style stored in the second memory includes the attribute information of the object and the controller changes the attribute of the disposed object according to the attribute information and displays an object according to the changed attribute.

14. The layout editing device according to claim 12 or 13, wherein the controller determines whether the object is deleted based on the type of the object.

15. The layout editing device according to one of claims 12 to 14, wherein the controller, if a layout style is selected by the selecting device, sets whether the object displayed on the display is deleted and determines whether the object is deleted according to the setting.

16. The layout editing device according to claim 15, wherein the controller is capable of setting whether the object is deleted depending on each type of object and/or
wherein the controller is capable of setting whether each of individual objects displayed on the display is deleted.

17. A layout editing device, comprising:
an input device for inputting an object to be printed;
a first memory that stores an object inputted by the input device;
a display that displays an object stored in the first memory;
a second memory that stores a layout style containing at least disposition information for specifying the position in which the object is to be disposed;
a selecting device for selecting a layout style for use from a plurality of layout styles stored in the second memory; and
a controller that disposes an object stored in the first memory based on the layout style selected by the selecting device, if a layout style selected by the selecting device includes the disposition information of objects other than the disposed object, adds an object based on the disposition information and displays the disposed object and the added object on the display, wherein the first memory stores whether each object is an object inputted by the input device and the controller further stores that an input occurs in the first memory when the input to an object is executed by the input device, if a new layout style is selected by the selecting device, deletes an object in which an input is not made in the first memory and after the object is deleted, adds the object.

18. The layout editing device according to claim 17, wherein the controller stores that an input occurs when at least one of an input of disposition information of the object, an input of the attribute information of the object and a data input to the object is executed.

19. The layout editing device according to one of claims 12 to 18, wherein the controller further matches an object contained in a layout style selected by the selecting device with an object stored in the first memory, disposes an object stored in the first memory according to the disposition information of a corresponding object based on a matching relationship and adds an object not matched.

20. The layout editing device according to claim 19, wherein the controller executes object matching based on a position relationship among a plurality of objects stored in the first memory and a position relationship between objects contained in the selected layout style and/or
wherein the controller, if an object composed of a character string is stored in the first memory, executes object matching based on the quantity of characters in the character string object and the size of the area of the character string object contained in a selected layout style.

21. The layout editing device according to claim 19 or 20, wherein the first memory stores an input order of objects and the controller executes object matching based on the input order stored in the first memory.

22. The layout editing device according to one of claims 12 to 21, wherein the controller further compares a quantity of the character string objects stored in the first memory with a quantity of the character string objects contained in a selected layout style and, if it is determined that the quantity of the character string objects stored in the first memory is larger, combines the character strings of a plurality of character string objects stored in the first memory and disposes the combined character strings in a single object and/or
compares a quantity of image objects stored in the first memory with a quantity of image objects contained in a selected layout style and if it is determined that the quantity of image objects stored in the first memory is larger, disposes the plurality of image objects stored in the first memory within the area of a single image object in order.

23. A layout editing program stored on a computer readable recording medium, for making the computer execute:
a selecting step of selecting a layout style for use from a plurality of layout styles stored in a layout style memory, each stored layout style containing at least disposition information for specifying the position in which an object to be printed is disposed;
a disposing step of reading an object from an object memory storing the object and disposing based on a layout style selected by the selecting step;
an object adding step of, if the layout style selected by the selecting step includes the disposition information of objects other than the objects disposed by the disposing step, adding an object based on the disposition information;
a display control step of controlling a display of an object disposed by the disposing step and an object added by the object adding step on a display; and
a delete YES/NO determining step of determining whether an object displayed on the display is deleted when a layout style is selected in the selecting step and a deletion step of, if a new layout style is selected by the selecting step, deleting an object determined to be allowed to be deleted by the delete YES/NO determining step, the object adding step adding an object after the object is deleted in the deleting step.

24. The layout editing program according to claim 23, wherein the layout style stored in the layout style memory includes attribute information of the object, the computer is made to execute an attribute changing step of changing the attribute of an object disposed by the disposing step according to the attribute information and the display control step controlling the display of an object according to the attribute changed by the attribute changing step.

25. The layout editing program according to claim 23 or 24, wherein in the delete YES/NO determining step, whether the object is deleted is determined based on the type of the object.

26. The layout editing program according to one of claims 23 to 25, further making the computer execute a delete YES/NO setting step of setting whether the object displayed by the display is deleted when a layout style is selected by the selecting step and in the delete YES/NO determining step, determining whether the object is deleted according to the setting by the delete YES/NO setting step.

27. The layout editing program according to claim 26, wherein the delete YES/NO setting step is capable of setting whether the object is deleted depending on each type of object and/or
wherein the delete YES/NO setting step is capable of setting whether each of individual objects displayed on the display is deleted.

28. A layout editing program stored on a computer readable recording medium making the computer execute:
an input step of inputting an object to be printed;
a selecting step of selecting a layout style for use from a plurality of layout styles stored in a layout style memory that stores a layout style containing at least the disposition information for specifying the position in which the object is to be disposed;
a disposing step of reading an object from an object memory that stores an inputted object in the input step and disposes it based on a layout style selected by the selecting step;
an object adding step of, if the layout style selected by the selecting step contains the disposition information of objects other than an object disposed by the disposing step, adding an object based on the disposition information;
a display control step of controlling a display of an object disposed by the disposing step and an object added by the object adding step on a display;
an input YES/NO memory control step of, when an input is made to an object in the input step, storing that the input is made in an input YES/NO memorizing means; and
a deleting step of, when a new layout style is selected by the selecting step, deleting an object whose input is not stored in the input YES/NO memorizing means, wherein the object adding step adds an object after an object is deleted in the deleting step.

29. The layout editing program according to claim 28, wherein the input YES/NO memory control step stores that an input is made when at least one of an input of disposition information of the object, an input of the attribute information of the object and a data input to the object is executed.

30. The layout editing program according to one of claims 23 to 29, further making the computer execute a matching step of matching an object contained in a layout style selected by the selecting step with an object stored in the object memory, wherein in the disposing step, disposing an object stored in the object memory according to the disposition information of a corresponding object based on a matching relationship by the matching step and in the object adding step, adding an object not matched by the matching step.

31. The layout editing program according to claim 30, wherein the matching step executes object matching based on a position relationship among a plurality of objects stored in the object memory and a position relationship between objects contained in a selected layout style and/or
wherein the matching step, if an object composed of a character string is stored in the object memory, executes object matching based on the quantity of characters in the character string object and the size of the area of a character string object contained in a selected layout style.

32. The layout editing program according to claim 30 or 31, wherein the matching step executes object matching based on the input order of objects stored in an input order memory.

33. The layout editing program according to one of claims 23 to 32, further making the computer execute a quantity comparing step of comparing a quantity of character string objects stored in the object memory with a quantity of character string objects contained in a selected layout style and a combining step of, if the quantity comparing step determines that the quantity of the character string objects stored in the object memory is larger, combining the character strings of a plurality of character string objects stored in the object memory, and in the disposing step, disposing the character string combined by the combining step in a single object and/or
making the computer execute a quantity comparing step of comparing a quantity of image objects stored in the object memory with a quantity of image objects contained in a selected layout style, wherein the disposing step, if the quantity comparing step determines that the quantity of image objects stored in the object memory is larger, disposes a plurality of image objects stored in the object memory within the area of a single image object in order.
